# EUROPEAN PATENT SPECIFICATION

(11) **EP 3 177 042 B1**
(45) Date of publication and mention of the grant of the patent: **10.07.2019**
(21) Application number: 16193662.0
(22) Date of filing: 13.10.2016
(51) Int. Cl.: H04W 4/00, H04W 84/12, H04W 88/06

(54) **METHOD AND APPARATUS FOR UPDATING CONNECTION PARAMETER OF LOW-POWER BLUETOOTH DEVICE**
VERFAHREN UND VORRICHTUNG ZUR AKTUALISIERUNG VON VERBINDUNGSPARAMETERN EINER NIEDRIGSTROM-BLUETOOTH-VORRICHTUNG
PROCÉDÉ ET APPAREIL DE MISE À JOUR DE PARAMÈTRE DE CONNEXION DE DISPOSITIF BLUETOOTH BASSE PUISSANCE

(30) Priority: 04.12.2015 CN 201510885741
(43) Date of publication of application: 07.06.2017
(73) Proprietor: Xiaomi Inc., Beijing 100085 (CN)
(72) Inventor: TAN, Kangxi, Beijing 100085 (CN); ZHANG, Jun, Beijing 100085 (CN); LIANG, Xin, Beijing 100085 (CN)
(74) Representative: Hughes, Andrea Michelle

(56) References cited:
- US-A1- 2011 021 142
- US-A1- 2015 221 194
- Anonymous: "Bluetooth Specification version 4.2", Bluetooth SIG, 2 December 2014 (2014-12-02), XP055359393, Retrieved from the Internet: URL:https://www.bluetooth.com/specificatio ns/adopted-specifications [retrieved on 2017-03-28]
- Anonymous: "21400457: Use shorter "instant" when updating Bluetooth LE connection parameters (LL_CONNECTION_UPDATE_REQ) . Issue #873 . lionheart/openradar-mirror . GitHub", , 3 August 2015 (2015-08-03), XP055359549, Retrieved from the Internet: URL:https://github.com/lionheart/openradar -mirror/issues/873 [retrieved on 2017-03-28]
- MIKHAYLOV KONSTANTIN: "Accelerated Connection Establishment (ACE) mechanism for Bluetooth Low Energy", 2014 IEEE 25TH ANNUAL INTERNATIONAL SYMPOSIUM ON PERSONAL, INDOOR, AND MOBILE RADIO COMMUNICATION (PIMRC), IEEE, 2 September 2014 (2014-09-02), pages 1264-1268, XP032789549, DOI: 10.1109/PIMRC.2014.7136362 [retrieved on 2015-06-25]
- Anonymous ET AL: "Quick connection parameters update - Nordic Developer Zone", Nordic Semiconductors - Developer Zone, 1 August 2014 (2014-08-01), XP055359308, Retrieved from the Internet: URL:https://devzone.nordicsemi.com/questio n/14519/quick-connection-parameters-update / [retrieved on 2017-03-28]
- Martijn: "rdar://21400278: Bluetooth LE Connection Parameter Update Request accepted, but LL_CONNECTION_UPDATE_REQ does not occur", , 16 June 2015 (2015-06-16), XP055567627, Retrieved from the Internet: URL:https://openradar.appspot.com/21400278 [retrieved on 2019-03-12]

## Description

### FIELD

The present disclosure generally relates to communication technology, and more particularly to method and apparatus for updating connection parameter of a low-power Bluetooth device.

### BACKGROUND

With the continuous development of Bluetooth technology, BLE (Bluetooth Low Energy) techniques supported by Bluetooth 4.0 protocol have been widely applied to the wireless remote control field, which enables Bluetooth remote control devices with more functions to be realised. It can be seen from the Bluetooth 4.0 protocol that three connection parameters are specified in the protocol, that is, Connection Interval, Slave Latency and Supervision Timeout, which determines the power consumption and data transmission capacity of the Bluetooth remote control device.

The Bluetooth remote control device may initiate a conversation for updating a connection parameter with a controlled device which is communicatively connected with the control device after Slave Latency portions of Connection Intervals, resulting in slow updating of the connection parameter, thereby affecting power consumption and data transmission capacity of the Bluetooth remote control device. Bluetooth Specification version 4.2", Bluetooth SIG, 2014-12-02) discloses technology building blocks that developers use to create the interoperable devices that make up the thriving Bluetooth ecosystem. 21400457: Use shorter "instant" when updating Bluetooth LE connection parameters (LL_CONNECTION_UPDATE_REQ) _ Issue #873 . lionheart/openradar-mirror. GitHub, 2015-08-03 discloses the usage of a minimum value for the field "Instant" (reaction time) of the Bluetooth Low Energy link layer command LL_CONNECTION_UPDATE_REQ, in pursuit of an improvement of the responsiveness of the Bluetooth Low Energy user device during user interactions. MIKHAYLOV KONSTANTIN: "Accelerated Connection Establishment (ACE) mechanism for Bluetooth Low Energy", 2014 IEEE 25TH ANNUAL INTERNATIONAL SYMPOSIUM ON PERSONAL, INDOOR, AND MOBILE RADIO COMMUNICATION (PIMRC), IEEE, 2014-09-02, pages 1264-1268) discloses two alternatives for changing the connection parameters of a Bluetooth Low Energy connection at the link layer of the Controller or at the L2CAP protocol level of the host.

### SUMMARY

In view of the deficiency in related arts, methods and apparatus for updating a connection parameter of a low-power Bluetooth device are provided in the disclosure.

In particular, the present disclosure is to be implemented through the following technical solutions.

According to a first aspect of the present disclosure, a method for updating a connection parameter of a low-power Bluetooth device is provided, wherein the method is applied to a Bluetooth remote control device which is communicatively connected with a controlled device, the method including: transmitting, to the controlled device, a prompt message indicating a switch of remote control mode in the Bluetooth remote control device, upon detection of a local switch of remote control mode, so that a request for updating a connection parameter is generated by the controlled device based on the prompt message and transmitted to the Bluetooth remote control device, wherein valid timingvalid timing for the connection parameter is carried in the request for updating the connection parameter, and is earlier than default valid timing; monitoring, for every Connection Interval after the local switch of remote control mode, whether the request for updating the connection parameter transmitted by the controlled device is received locally; transmitting, to the controlled device, a response for agreeing to update the connection parameter, upon detection of the request for updating the connection parameter; and updating the connection parameter between the Bluetooth remote control device and the controlled device, when the valid timingvalid timing for the connection parameter expires.

In one embodiment, updating the connection parameter between the Bluetooth remote control device and the controlled device upon detection of a local switch to a voice remote control mode includes: shortening the Connection Interval between the Bluetooth remote control device and the controlled device to a first predetermined duration.

In one embodiment, the switch to the voice remote control mode is realized by pressing a button for voice control, the method further including: transmitting, to the controlled device, a prompt message indicating that the button for voice control has been released, upon detection of a release of the button for voice control, so that a first request for updating the connection parameter to a previous value is generated by the controlled device based on the prompt message and transmitted to the Bluetooth remote control device, wherein valid timingvalid timing for the connection parameter is carried in the first request for updating the connection parameter, and is earlier than a default valid timing; monitoring, for every Connection Interval in a second predetermined duration after the release of the button for voice control, whether the first request transmitted by the controlled device is received locally; transmitting, to the controlled device, a response for agreeing to update the connection parameter, upon detection of the first request; and updating the connection parameter between the Bluetooth remote control device and the controlled device to the previous value, when the valid timing for the connection parameter carried in the first request expires.

In one embodiment, the switch to the voice remote control mode is realized by pressing a button for voice control, the method further including: transmitting, to the controlled device, a second request for updating the connection parameter to a preset value, upon detection of a release of the button for voice control; monitoring, for every Connection Interval in a second predetermined duration after the release of the button for voice control, whether a response for agreeing to update the connection parameter to the preset value transmitted by the controlled device is received locally, wherein valid timing for the connection parameter is carried in the response, and is earlier than a default valid timing; updating, if the response for agreeing to update the connection parameter to the preset value transmitted by the controlled device is received, the connection parameter between the Bluetooth remote control device and the controlled device to the preset value, when the valid timing carried in the response expires.

In one embodiment, updating the connection parameter between the Bluetooth remote control device and the controlled device upon detection of a local switch to a button remote control mode includes: lengthening the Connection Interval between the Bluetooth remote control device and the controlled device to a third predetermined duration.

According to a second aspect of the present disclosure, a method for updating a connection parameter of a low-power Bluetooth device is provided, wherein the method is applied to a controlled device which is communicatively connected with a Bluetooth remote control device, the method including: receiving a prompt message transmitted by the Bluetooth remote control device, wherein the prompt message indicates a switch of remote control mode in the Bluetooth remote control device; generating, based on the prompt message, a request for updating a connection parameter and transmitting the request to the Bluetooth remote control device, wherein valid timing for the connection parameter is carried in the request for updating the connection parameter, and is earlier than default valid timing; receiving a response for agreeing to update the connection parameter transmitted by the Bluetooth remote control device; and updating the connection parameter between the controlled device and the Bluetooth remote control device, when the valid timing for the connection parameter expires.

According to a third aspect of the present disclosure, a method for updating a connection parameter of a low-power Bluetooth device is provided, wherein the method is applied to a Bluetooth remote control device which is communicatively connected with a controlled device, the method including: transmitting, to the controlled device, a request for updating a connection parameter, upon detection of a local switch of remote control mode; monitoring, for every Connection Interval after the local switch of remote control mode, whether a response for agreeing to update the connection parameter transmitted by the controlled device is received locally, wherein valid timing for the connection parameter is carried in the response, and is earlier than default valid timing; and updating, if the response is received, the connection parameter between the Bluetooth remote control device and the controlled device, when the valid timing for the connection parameter expires.

According to a fourth aspect of the present disclosure, a method for updating a connection parameter of a low-power Bluetooth device is provided, wherein the method is applied to a controlled device which is communicatively connected with a Bluetooth remote control device, the method including: receiving a request for updating a connection parameter transmitted by the Bluetooth remote control device; transmitting, to the Bluetooth remote control device, a response for agreeing to update the connection parameter, based on the request for updating the connection parameter, wherein valid timing for the connection parameter is carried in the response, and is earlier than default valid timing; and updating the connection parameter between the controlled device and the Bluetooth remote control device, when the valid timing for the connection parameter expires.

According to a fifth aspect of the present disclosure, an apparatus for updating a connection parameter of a low-power Bluetooth device is provided, wherein the apparatus is applied to a Bluetooth remote control device which is communicatively connected with a controlled device, the apparatus including: a first transmission module configured to transmit, to the controlled device, a prompt message indicating a switch of remote control mode in the Bluetooth remote control device, upon detection of a local switch of remote control mode, so that a request for updating a connection parameter is generated by the controlled device based on the prompt message and transmitted to the Bluetooth remote control device, wherein valid timing for the connection parameter is carried in the request for updating the connection parameter, and is earlier than default valid timing; a first monitor module configured to monitor, for every Connection Interval after the local switch of remote control mode, whether the request for updating the connection parameter transmitted by the controlled device is received locally; a first response module configured to transmit, to the controlled device, a response for agreeing to update the connection parameter, upon detection of the request for updating the connection parameter; and a first update module configured to update the connection parameter between the Bluetooth remote control device and the controlled device, when the valid timing for the connection parameter expires.

In one embodiment, the first update module includes: a first update submodule configured to the Connection Interval between the Bluetooth remote control device and the controlled device to a first predetermined duration, upon detection of a local switch to a voice remote control mode.

In one embodiment, the switch to the voice remote control mode is realized by pressing a button for voice control, the apparatus further including: a second transmission module configured to transmit, to the controlled device, a prompt message indicating that the button for voice control has been released, upon detection of a release of the button for voice control, so that a first request for updating the connection parameter to a previous value is generated by the controlled device based on the prompt message and transmitted to the Bluetooth remote control device, wherein valid timing for the connection parameter is carried in the first request for updating the connection parameter, and is earlier than a default valid timing ; a second monitor module configured to monitor, for every Connection Interval in a second predetermined duration after the release of the button for voice control, whether the first request transmitted by the controlled device is received locally; a second response module configured to transmit, to the controlled device, a response for agreeing to update the connection parameter upon detection of the first request; and a second update module configured to update the connection parameter between the Bluetooth remote control device and the controlled device to the previous value, when the valid timing for the connection parameter carried in the first request expires.

In one embodiment, the switch to the voice remote control mode is realized by pressing a button for voice control, the apparatus further including: a third transmission module configured to transmit, to the controlled device, a second request for updating the connection parameter to a preset value upon detection of a release of the button for voice control; a third monitor module configured to monitor, for every Connection Interval in a second predetermined duration after the release of the button for voice control, whether a response for agreeing to update the connection parameter to the preset value transmitted by the controlled device is received locally, wherein valid timing for the connection parameter is carried in the response, and is earlier than a default valid timing; a third update module configured to update, if the response for agreeing to update the connection parameter to the preset value transmitted by the controlled device is received, the connection parameter between the Bluetooth remote control device and the controlled device to the preset value, when the valid timing carried in the response expires.

In one embodiment, the first update module including: a third update submodule configured to lengthen the Connection Interval between the Bluetooth remote control device and the controlled device to a second predetermined duration, upon detection of a local switch to a button remote control mode.

According to a sixth aspect of the present disclosure, an apparatus for updating a connection parameter of a low-power Bluetooth device is provided, wherein the apparatus is applied to a controlled device which is communicatively connected with a Bluetooth remote control device, the apparatus including: a first reception module configured to receive a prompt message transmitted by the Bluetooth remote control device, wherein the prompt message indicates a switch of remote control mode in the Bluetooth remote control device; a fourth transmission module configured to generate, based on the prompt message, a request for updating a connection parameter and transmitting the request to the Bluetooth remote control device, wherein valid timing for the connection parameter is carried in the request for updating the connection parameter and is earlier than default valid timing; a second reception module configured to receive a response for agreeing to update the connection parameter transmitted by the Bluetooth remote control device; and a forth update module configured to update the connection parameter between the controlled device and the Bluetooth remote control device, when the valid timing for the connection parameter expires.

According to a seventh aspect of the present disclosure, an apparatus for updating a connection parameter of a low-power Bluetooth device is provided, wherein the apparatus is applied to a Bluetooth remote control device which is communicatively connected with a controlled device, the apparatus including: a fifth transmission module configured to transmit, to the controlled device, a request for updating a connection parameter upon detection of a local switch of remote control mode; a fourth monitor module configured to monitor, for every Connection Interval after the local switch of remote control mode, whether a response for agreeing to update the connection parameter transmitted by the controlled device is received locally, wherein valid timing for the connection parameter is carried in the response, and is earlier than default valid timing; and a fifth update module configured to update if the response is received, the connection parameter between the Bluetooth remote control device and the controlled device, when the valid timing for the connection parameter expires.

According to an eighth aspect of the present disclosure, an apparatus for updating a connection parameter of a low-power Bluetooth device is provided, wherein the apparatus is applied to a controlled device which is communicatively connected with a Bluetooth remote control device, the apparatus including: a third reception module configured to receive a request for updating a connection parameter transmitted by the Bluetooth remote control device; a sixth transmission module configured to transmit, to the Bluetooth remote control device, a response for agreeing to update the connection parameter, based on the request for updating the connection parameter, wherein valid timing for the connection parameter is carried in the response, and is earlier than default valid timing; and a sixth update module configured to update the connection parameter between the controlled device and the Bluetooth remote control device, when the valid timing for the connection parameter expires.

According to a ninth aspect of the present disclosure, an apparatus for updating a connection parameter of a low-power Bluetooth device is provided, the apparatus including: a processor; a memory for storing processor-executable instructions; wherein the processor is configured to: transmit, to a controlled device, a prompt message indicating a switch of remote control mode in a Bluetooth remote control device, upon detection of a local switch of remote control mode, so that a request for updating a connection parameter is generated by the controlled device based on the prompt message and transmitted to the Bluetooth remote control device, wherein valid timing for the connection parameter is carried in the request for updating the connection parameter, and is earlier than default valid timing; monitor, for every Connection Interval after the local switch of remote control mode, whether the request for updating the connection parameter transmitted by the controlled device is received locally; transmit, to the controlled device, a response for agreeing to update the connection parameter, upon detection of the request for updating the connection parameter; and update the connection parameter between the Bluetooth remote control device and the controlled device, when the valid timing for the connection parameter expires.

According to a tenth aspect of the present disclosure, an apparatus for updating a connection parameter of a low-power Bluetooth device is provided, the apparatus including: a processor; a memory for storing processor-executable instructions; wherein the processor is configured to: receive a prompt message transmitted by a Bluetooth remote control device, wherein the prompt message indicates a switch of remote control mode in the Bluetooth remote control device; generate, based on the prompt message, a request for updating a connection parameter and transmit the request to the Bluetooth remote control device, wherein valid timing for the connection parameter is carried in the request for updating the connection parameter, and is earlier than default valid timing; receive a response for agreeing to update the connection parameter transmitted by the Bluetooth remote control device; and update the connection parameter between a controlled device and the Bluetooth remote control device, when the valid timing for the connection parameter expires.

According to an eleventh aspect of the present disclosure, an apparatus for updating a connection parameter of a low-power Bluetooth device is provided, the apparatus including: a processor; a memory for storing processor-executable instructions; wherein the processor is configured to: transmit, to a controlled device, a request for updating a connection parameter, upon detection of a local switch of remote control mode; monitor, for every Connection Interval after the local switch of remote control mode, whether a response for agreeing to update the connection parameter transmitted by the controlled device is received locally, wherein reaction timing for the connection parameter is carried in the response, and is earlier than default reaction timing; and update, if the response is received, the connection parameter between the Bluetooth remote control device and the controlled device, when the reaction timing for the connection parameter expires.

According to a twelfth aspect of the present disclosure, an apparatus for updating a connection parameter of a low-power Bluetooth device is provided, the apparatus including: a processor; a memory for storing processor-executable instructions; wherein the processor is configured to: receive a request for updating a connection parameter transmitted by a Bluetooth remote control device; transmit, to the Bluetooth remote control device, a response for agreeing to update the connection parameter, based on the request for updating the connection parameter, wherein reaction timing for the connection parameter is carried in the response, and is earlier than default reaction timing; and update the connection parameter between a controlled device and the Bluetooth remote control device, when the reaction timing for the connection parameter expires.

The technical solution disclosed in the embodiments may provide the following advantages:

Since the amounts of data generated by the Bluetooth remote control device in different remote control modes are different, and different amounts of data may require different settings of the connection parameter, whether the connection parameter is updated may be determined by detection of remote control mode of the Bluetooth remote control device in the embodiment. Upon detection of a switch of remote control mode, a related prompt message may be transmitted to the controlled device immediately and a request for updating the connection parameter from the controlled device may be monitored at every Connection Interval, so that the response speed of the Bluetooth remote control device and the update speed of the connection parameter may be improved.

In the embodiment, the communication interval between the Bluetooth remote control device and the controlled device may be lengthened by lengthening the Connection Interval between them if the Bluetooth remote control device is in a button remote control mode, so that basic data transmission capability of the Bluetooth remote control device may be realized while a low power consumption state of the Bluetooth remote control device may be maintained.

In the embodiment, the communication interval between the Bluetooth remote control device and the controlled device may be shortened by shortening the Connection Interval between them if the Bluetooth remote control device is in a voice remote control mode, so that the switch to a short communication interval may be accelerated and a lag in the voice transmission due to slow switching operation may be avoided.

In the embodiment, a request for updating the connection parameter to a previous value may be transmitted to the Bluetooth remote control device after receiving, by the controlled device, a message from the Bluetooth remote control device indicating that the voice remote control mode of the Bluetooth remote control device has ended, or the connection parameter may be updated to a previous value by the controlled device after the voice remote control mode of the Bluetooth remote control device comes to an end, so that readjustment of the connection parameter may be avoided next time when the Bluetooth remote control device is used.

In the embodiment, the connection parameter may be quickly updated by bringing forward the reaction timing for the connection parameter.

It is to be understood that the above general description and the following detailed description are merely for the purpose of illustration and explanation, and are not intended to limit the scope of the protection of the invention which is defined by the claims.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is an application scenario illustrating a method for updating a connection parameter of a low-power Bluetooth device according to an exemplary embodiment;
Fig. 2 is a flow diagram illustrating a method for updating a connection parameter of a low-power Bluetooth device according to an exemplary embodiment;
Fig. 3 is another flow diagram illustrating a method for updating a connection parameter of a low-power Bluetooth device according to an exemplary embodiment;
Fig. 4 is another flow diagram illustrating a method for updating a connection parameter of a low-power Bluetooth device according to an exemplary embodiment;
Fig. 5 is another flow diagram illustrating a method for updating a connection parameter of a low-power Bluetooth device according to an exemplary embodiment;
Fig. 6 is another flow diagram illustrating a method for updating a connection parameter of a low-power Bluetooth device according to an exemplary embodiment;
Fig. 7 is a block diagram illustrating an apparatus for updating a connection parameter of a low-power Bluetooth device according to an exemplary embodiment;
Fig. 8 is another block diagram illustrating an apparatus for updating a connection parameter of a low-power Bluetooth device according to an exemplary embodiment;
Fig. 9 is another block diagram illustrating an apparatus for updating a connection parameter of a low-power Bluetooth device according to an exemplary embodiment;
Fig. 10 is another block diagram illustrating an apparatus for updating a connection parameter of a low-power Bluetooth device according to an exemplary embodiment;
Fig. 11 is another block diagram illustrating an apparatus for updating a connection parameter of a low-power Bluetooth device according to an exemplary embodiment;
Fig. 12 is another block diagram illustrating an apparatus for updating a connection parameter of a low-power Bluetooth device according to an exemplary embodiment;
Fig. 13 is another block diagram illustrating an apparatus for updating a connection parameter of a low-power Bluetooth device according to an exemplary embodiment;
Fig. 14 is another block diagram illustrating an apparatus for updating a connection parameter of a low-power Bluetooth device according to an exemplary embodiment;
Fig. 15 is a structure block diagram illustrating an apparatus used for updating a connection parameter of a low-power Bluetooth device according to an exemplary embodiment.

### DETAILED DESCRIPTION

Reference will now be made in detail to exemplary embodiments, examples of which are illustrated in the accompanying drawings. The following description refers to the accompanying drawings in which same numbers in different drawings represent same or similar elements unless otherwise described. The implementations set forth in the following description of exemplary embodiments do not represent all implementations consistent with the invention. Instead, they are merely examples of device and methods consistent with aspects related to the invention as recited in the appended claims.

With the continuous development of Bluetooth technology, BLE (Bluetooth Low Energy) techniques supported by Bluetooth 4.0 protocol have been widely applied to the wireless remote control field. In addition to the traditional button remote control mode, a voice remote control mode may also be supported by the Bluetooth remote control device. According to specifications in Bluetooth 4.0 protocol relating to low-power Bluetooth devices, a controlled device which is communicatively connected with the Bluetooth remote control device may be required to monitor, for every Connection Interval, whether there is data transmitted by the Bluetooth remote control device. The Bluetooth remote control device may respond with one data packet or an empty packet in Slave Latency portions of Connection Intervals at most so as to maintain communication connection.

The Bluetooth remote control device may initiate a conversation for updating a connection parameter with a controlled device which is communicatively connected with the control device after Slave Latency portions of Connection Intervals, resulting in slow updating of the connection parameter, thereby affecting power consumption and data transmission capacity of the Bluetooth remote control device. In view of the above deficiency, methods and apparatus for updating a connection parameter of a low-power Bluetooth device are provided in the disclosure.

For ease of understanding, technical schemes provided in the disclosure may be described in combination of the exemplary embodiments set forth herein.

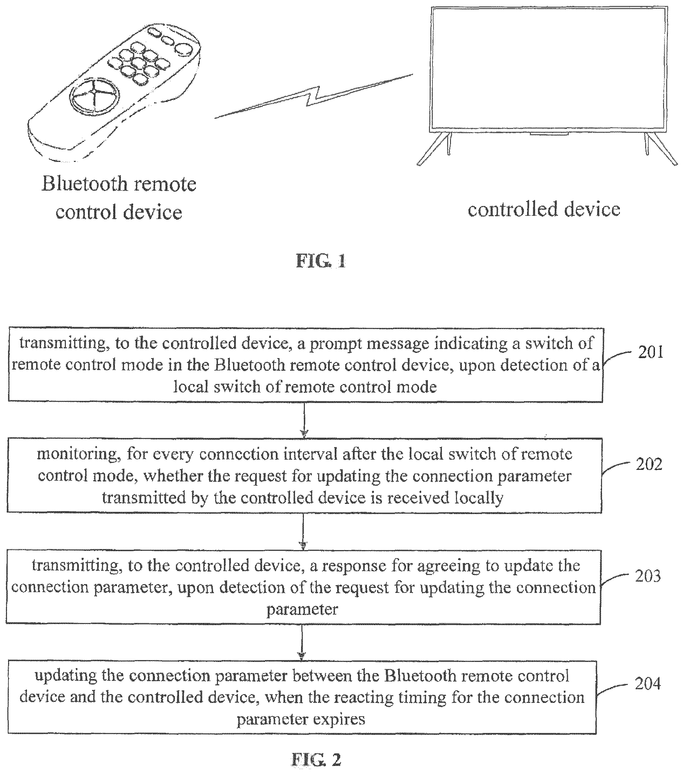

Fig. 1 is an application scenario illustrating a method for updating a connection parameter of a low-power Bluetooth device according to an exemplary embodiment. The application scenario may include a Bluetooth remote control device and a controlled device, wherein the Bluetooth remote control device is communicatively connected with the controlled device via Bluetooth connection, and the controlled device may be controlled by the Bluetooth remote control device via a button or human voice. In real world application, the Bluetooth remote control device may include a Bluetooth remote control, a smart phone, a tablet PC and the like, while the controlled device may include a smart TV, a smart air conditioning, a smart bedside lamp, a smart refrigerator and other smart household equipment, which is not limited in the disclosure.

A method for updating a connection parameter of a low-power Bluetooth device is described below, wherein the method is applied to a Bluetooth remote control device.

Fig. 2 is a flow diagram illustrating a method for updating a connection parameter of a low-power Bluetooth device according to an exemplary embodiment, wherein the method is applied to a Bluetooth remote control device which is communicatively connected with a controlled device. The method may include the following steps.

At 201, transmitting, to the controlled device, a prompt message indicating a switch of remote control mode in the Bluetooth remote control device, upon detection of a local switch of remote control mode, so that a request for updating a connection parameter is generated by the controlled device based on the prompt message and transmitted to the Bluetooth remote control device, wherein valid timing for the connection parameter is carried in the request for updating the connection parameter, and is earlier than default valid timing.

It should be noted that remote control mode in the embodiment may include a button remote control mode and a voice remote control mode, wherein the voice remote control mode may be activated by pressing a button for voice control or inputting human voice for voice control, which is not limited in the disclosure.

It is to be understood that the amounts of data generated by the Bluetooth remote control device in different remote control modes are generally different. Taking a Bluetooth remote control as an example, a relatively large amount of data (primarily voice data) may be generated by the Bluetooth remote control if voice remote control function is used by a user, and a relatively small amount of data may be generated by the Bluetooth remote control if only button remote control function is used by the user.

Since a fixed-length packet may be transmitted every time the Bluetooth remote control device transmits data to the controlled device, the Bluetooth remote control device may need to perform multiple consecutive transmission of data packets to the controlled device if the amount of data generated by the Bluetooth remote control device for transmission is relatively large. In this situation, if there is a long communication interval between the Bluetooth remote control device and the controlled device, complete data may not be able to be transmitted to the controlled device, and if there is a small amount of data to be transmitted, only one data packet may need to be transmitted to the Bluetooth remote control device. In this case, if there is a short communication interval between the Bluetooth remote control device and the controlled device, a frequent transmission of data packets to the controlled device may undoubtedly produce more power consumption.

In view of the above, whether to initiate a conversation for updating a connection parameter with a controlled device may be determined by detection of remote control mode of the Bluetooth remote control device in the embodiment. Upon detection detecting a switch of remote control mode, the conversation for updating the connection parameter with the controlled device may be initiated, so that the communication interval between the Bluetooth remote control device and the controlled device may be adjusted by adjusting the connection parameter between them.

Still taking a Bluetooth remote control as an example, when it is detected by the Bluetooth remote control that an ordinary button of the remote control has been pressed by a user, a prompt message indicating a press to an ordinary button of the Bluetooth remote control may be transmitted to the controlled device (for example, a smart TV). A request for updating a connection parameter may be transmitted to the Bluetooth remote control upon receipt of the prompt message by the smart TV.

It is to be noted that the following information may be carried in the request for updating connection parameter: information for numerical adjustment of the Connection Interval between the Bluetooth remote control device and the controlled device, or information for numerical adjustment of the Slave Latency between the Bluetooth remote control device and the controlled device, or information for numerical adjustment of the Connection Interval and the Slave Latency between the Bluetooth remote control device and the controlled device, all of which are not limited in the embodiment.

In addition, reaction time for the connection parameter carried in the request for updating the connection parameter is generally default portions (Slave Latency + M) of Connection Intervals in the prior art. That is to say, the controlled device and the Bluetooth remote control device may not update the connection parameter until (Slave Latency + M) portion of Connection Intervals later since the request for updating the connection parameter was transmitted by the controlled device. In the case that the duration of the Slave Latency is relatively long, the speed of updating the connection parameter may be relatively slow.

Considering the above situation, a request for updating the connection parameter which carries earlier reaction timing for the connection parameter may be generated by the controlled device upon its receipt of the prompt message transmitted by the Bluetooth remote control device in the embodiment. In some embodiments, reaction time for the connection parameter in the embodiment may be M portions of Connection Intervals, i.e., the connection parameter may be updated by the controlled device and the Bluetooth remote control device M portions of Connection Intervals later since the request for updating the connection parameter was transmitted by the controlled device, so that Slave Latency portions of Connection Intervals may be saved. Reaction timing for the connection parameter may be brought forward in embodiments compared to a default reaction timing in the prior art, so that the speed of updating the connection parameter may be improved.

It is to be noted that in view of the fact that the Bluetooth remote control device may be situated in a chaotic environment with various Bluetooth signals from various other devices, the value of M should not be too small, as the Bluetooth remote control device may be unable to receive the content transmitted by the controlled device if the value of M is very small. Based on the above consideration, M is usually set as 7. In other embodiments, the value of M may be set by the user as required, which is not limited in the embodiment.

At step 202, monitoring, for every Connection Interval after the local switch of remote control mode, whether the request for updating the connection parameter transmitted by the controlled device is received locally.

Upon the switch of remote control mode, the Bluetooth remote control device may monitor whether there is a request for updating a parameter from the controlled device at each Connection Interval, i.e., the Bluetooth remote control device may perform monitoring at each Connection Interval.

In an embodiment, upon an ordinary button of the Bluetooth remote control being pressed, the Bluetooth remote control may monitor whether there is a request for updating a parameter from the controlled device at each Connection Interval, i.e., the Bluetooth remote control may perform monitoring at each Connection Interval.

At step 203, transmitting, to the controlled device, a response for agreeing to update the connection parameter, upon detection of the request for updating the connection parameter; so that the connection parameter between the Bluetooth remote control device and the controlled device may be updated when the reaction timing for the connection parameter expires.

At step 204, updating the connection parameter between the Bluetooth remote control device and the controlled device, when the reaction timing for the connection parameter expires.

The Bluetooth remote control device may agree to the request for updating the connection parameter from the controlled device upon detection of the request for updating the connection parameter. The Bluetooth remote control device and the controlled device may update the connection parameter between them when the reaction timing for the connection parameter expires, so that the connection parameter may be updated in both the Bluetooth remote control device and the controlled device in a relatively short period of time.

In an embodiment, reaction time for the connection parameter carried in the request for updating the connection parameter is 7 Connection Intervals and the time point at which the request for updating the connection parameter is transmitted from the controlled device to the Bluetooth remote control device is A, then the connection parameter may be updated in both the Bluetooth remote control device and the controlled device at the time point of A + 7^{∗}(Connection Interval).

In a real world application scenario, upon detection of a local switch to a button remote control mode by the Bluetooth remote control device and in view of a relatively small amount of data generated in the button remote control mode, the step 204 as described above may include:

Lengthening the Connection Interval between the Bluetooth remote control device and the controlled device to a second predetermined duration.

In the embodiment, the communication interval between the Bluetooth remote control device and the controlled device may be lengthened by lengthening the Connection Interval between them if the Bluetooth remote control device is in a button remote control mode, so that basic data transmission capability of the Bluetooth remote control device may be realized while a low power consumption state of the Bluetooth remote control device may be maintained.

It can be seen from the above that whether the connection parameter is updated may be determined by detection of remote control mode of the Bluetooth remote control device in the embodiment. Upon detection of a switch of remote control mode, a related prompt message may be transmitted to the controlled device immediately and a conversation for updating the connection parameter from the controlled device may be monitored at every Connection Interval, so that the response speed of the Bluetooth remote control device and the update speed of the connection parameter may be improved.

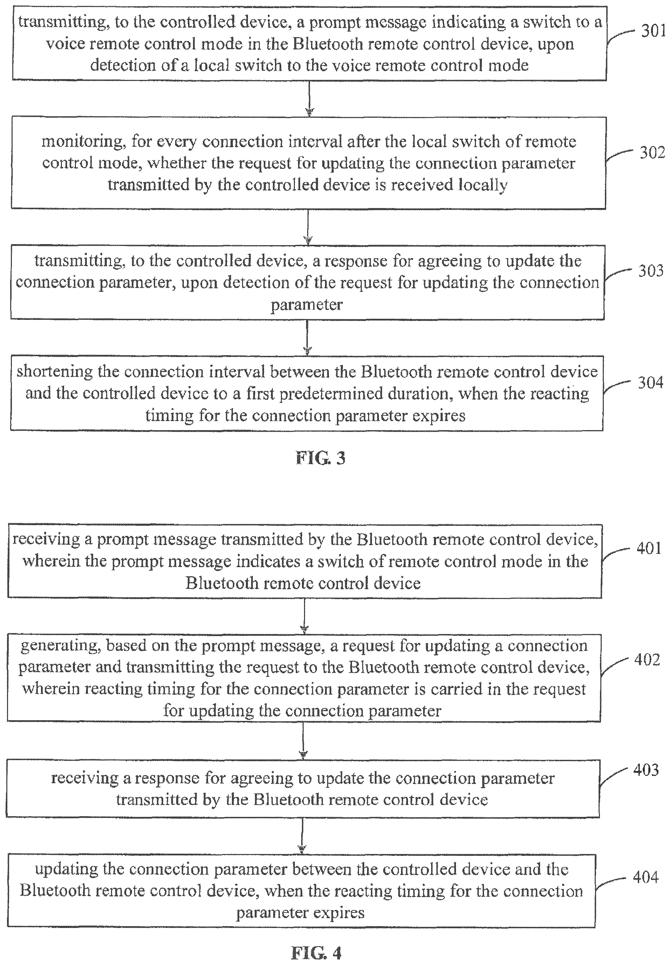

Fig. 3 is another flow diagram illustrating a method for updating a connection parameter of a low-power Bluetooth device according to an exemplary embodiment, wherein the method is applied to a Bluetooth remote control device which is communicatively connected with a controlled device, the method may include the following steps for a switch to a voice remote control mode.

At step 301, transmitting, to the controlled device, a prompt message indicating a switch to a voice remote control mode in the Bluetooth remote control device, upon detection of a local switch to the voice remote control mode, so that a request for updating a connection parameter is generated by the controlled device based on the prompt message and transmitted to the Bluetooth remote control device, wherein reaction timing for the connection parameter is carried in the request for updating the connection parameter, and is earlier than default reaction timing.

Taking a Bluetooth remote control as an example, when it is detected by the Bluetooth remote control that a button for voice control (which is different from ordinary buttons in practical application) of the remote control has been pressed by a user, a prompt message indicating a press to the button for voice control of the Bluetooth remote control may be transmitted to the controlled device (for example, a smart TV). A request for updating a connection parameter may be transmitted to the Bluetooth remote control upon receipt of the prompt message by the smart TV.

At step 302, monitoring, for every Connection Interval after the local switch of remote control mode, whether the request for updating the connection parameter transmitted by the controlled device is received locally.

Taking the Bluetooth remote control as an example, after a press to the button for voice control of the Bluetooth remote control, the Bluetooth remote control may monitor whether there is a request for updating the connection parameter from the smart TV at each Connection Interval, i.e., the Bluetooth remote control may perform monitoring at each Connection Interval.

At step 303, transmitting, to the controlled device, a response for agreeing to update the connection parameter, upon detection of the request for updating the connection parameter, so that the connection parameter between the Bluetooth remote control device and the controlled device may be updated when the reaction timing for the connection parameter expires.

At step 304, shortening the Connection Interval between the Bluetooth remote control device and the controlled device to a first predetermined duration, when the reaction timing for the connection parameter expires.

The user may need to input voice information to the Bluetooth remote control device while using the voice remote control mode of the Bluetooth remote control device to control the controlled device. The amount of data for transmission in the voice remote control mode is relatively large compared to that in the button remote control mode.

In the embodiment, the communication interval between the Bluetooth remote control device and the controlled device may be shortened by shortening the Connection Interval between them if the Bluetooth remote control device is in a voice remote control mode, so that the switch to a short communication interval may be accelerated and a lag in the voice transmission due to slow switching operation may be avoided.

In the embodiment, a request for updating the connection parameter to a previous value may be transmitted to the Bluetooth remote control device after receiving, by the controlled device, a message from the Bluetooth remote control device indicating that the voice remote control mode of the Bluetooth remote control device has ended, or the connection parameter may be updated to a previous value by the controlled device after the voice remote control mode of the Bluetooth remote control device comes to an end, so that readjustment of the connection parameter may be avoided next time when the Bluetooth remote control device is used.

In one implementation, if the switch to the voice remote control mode is realized by pressing a button for voice control and the ending of the voice remote control mode is realized by releasing the button for voice control, the above process may include the following steps.

At S1, the Bluetooth remote control device may transmit, to the controlled device, a prompt message indicating that the button for voice control has been released, upon detection of a release of the button for voice control, so that a first request for updating the connection parameter to a previous value may be generated by the controlled device based on the prompt message and transmitted to the Bluetooth remote control device, wherein reaction timing for the connection parameter is carried in the first request for updating the connection parameter, and is earlier than a default reaction timing.

At S2, the Bluetooth remote control device may monitor, for every Connection Interval in a second predetermined duration after the release of the button for voice control, whether the first request transmitted by the controlled device is received locally.

Taking the Bluetooth remote control as an example, the Bluetooth remote control may monitor, for every Connection Interval in a certain period after the release of the button for voice control. For example, the Bluetooth remote control may monitor, for every Connection Interval within hundreds of millisecond after the release of the button for voice control to ensure a quick and timely response to the controlled device.

At S3, the Bluetooth remote control device may transmit, to the controlled device, a response for agreeing to update the connection parameter, upon detection of the first request.

At S4, the Bluetooth remote control device may update the connection parameter between the Bluetooth remote control device and the controlled device to the previous value, when the reaction timing for the connection parameter carried in the first request expires.

From a perspective of the controlled device, a local Bluetooth chip may be informed that the function of the Bluetooth remote control device to quickly update the connection parameter may not be needed after a transmission of the request for updating the connection parameter by the controlled device. The Bluetooth chip may return to a previous mode, i.e., reaction timing for updating the connection parameter may return to a default value of (Connection Interval)^{∗}(Slave Latency + M).

In another implementation, if the switch to the voice remote control mode is realized by pressing a button for voice control and the ending of the voice remote control mode is realized by releasing the button for voice control, the above process may include the following steps.

At S1', the Bluetooth remote control device may transmit, to the controlled device, a second request for updating the connection parameter to a preset value, upon detection of a release of the button for voice control.

It is to be noted that the preset value in the embodiment may be interpreted as an appropriate value for the Bluetooth remote control device. In practice, the preset value may be selected according to requirements, which is not limited in the embodiment.

At S2', the Bluetooth remote control device may monitor, for every Connection Interval in a second predetermined duration after the release of the button for voice control, whether a response for agreeing to update the connection parameter to the preset value transmitted by the controlled device is received locally, wherein reaction timing for the connection parameter is carried in the response, and is earlier than a default reaction timing

At S3', the Bluetooth remote control device may update, if the response for agreeing to update the connection parameter to the preset value transmitted by the controlled device is received, the connection parameter between the Bluetooth remote control device and the controlled device to the preset value, when the reaction timing carried in the response expires.

In view of the fact that the implementation steps of the above two implementations are similar to that of the embodiments illustrated in Fig. 2 and Fig. 3 with the only difference in an adjustment to the value of the parameter, details will not be described herein again.

Corresponding to the method that may be applied to the Bluetooth remote control device illustrated in Fig. 2, a method for updating a connection parameter of a low-power Bluetooth device that may be applied to the controlled device illustrated will be described in the following.

Fig. 4 is another flow diagram illustrating a method for updating a connection parameter of a low-power Bluetooth device according to an exemplary embodiment, wherein the method is applied to a controlled device which is communicatively connected with a Bluetooth remote control device. The method may include the following steps.

At 401, the controlled device may receive a prompt message transmitted by the Bluetooth remote control device, wherein the prompt message indicates a switch of remote control mode in the Bluetooth remote control device.

In the embodiment, the controlled device may be informed a switch of remote control mode in the Bluetooth remote control device through a prompt message transmitted from the Bluetooth remote control device. Accordingly, after the prompt message being received by the controlled device, a specific remote control mode to which the Bluetooth remote control device has switched may be determined based on an analysis of the prompt message.

At 402, the controlled device may generate, based on the prompt message, a request for updating a connection parameter and transmitting the request to the Bluetooth remote control device, wherein reaction timing for the connection parameter is carried in the request for updating the connection parameter, and is earlier than default reaction timing.

In one implementation, for the purpose of a quick update of the connection parameter, the Bluetooth chip on the controlled device side may be informed, upon detection of a switch of remote control mode, by the controlled device to bring forward reaction timing for the connection parameter between the Bluetooth remote control device and the controlled device while at the same time ensure no interference to other Bluetooth devices will result.

At 403, the controlled device may receive a response for agreeing to update the connection parameter transmitted by the Bluetooth remote control device.

At 404, the controlled device may update the connection parameter between the controlled device and the Bluetooth remote control device, when the reaction timing for the connection parameter expires.

In the embodiment, the connection parameter may be quickly updated by bringing forward the reacting timing for the connection parameter.

In the methods as illustrated in Fig.2-Fig.4, the connection parameter may be updated based on the request device for updating the connection parameter initiated by the controlled. According to the technical scheme provided herein, the request for updating the connection parameter may also be initiated by the Bluetooth remote control device. Details of the technical scheme may be described below from both the Bluetooth remote control device side and the controlled device side.

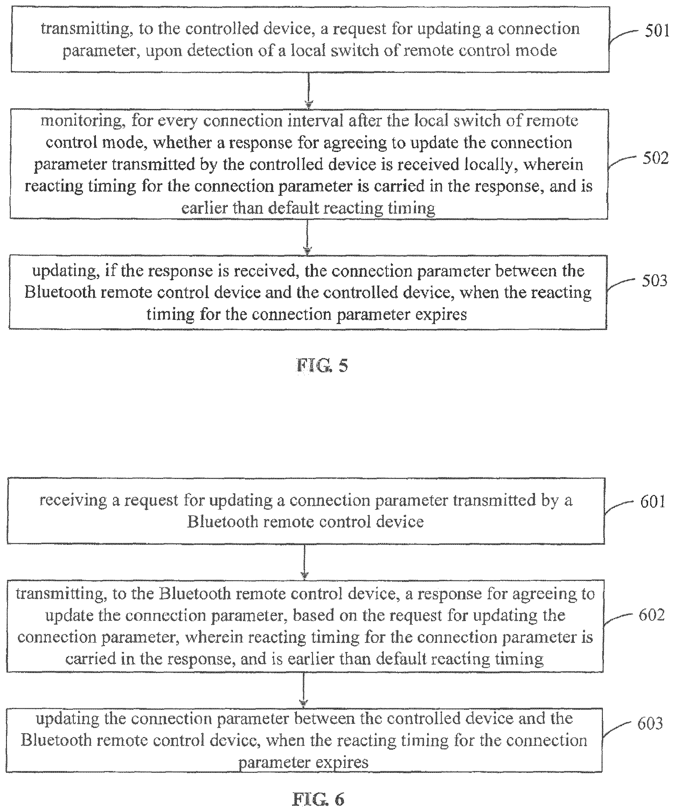

Fig. 5 is another flow diagram illustrating a method for updating a connection parameter of a low-power Bluetooth device according to an exemplary embodiment, wherein the method is applied to a Bluetooth remote control device which is communicatively connected with a controlled device. The method may include the following steps.

At step 501, the Bluetooth remote control device may transmit, to the controlled device, a request for updating a connection parameter, upon detection of a local switch of remote control mode.

For example, the Bluetooth remote control device may transmit, to the controlled device, a request for updating a connection parameter, upon detection of a press to a button for voice control.

At step 502, the Bluetooth remote control device may monitor, for every Connection Interval after the local switch of remote control mode, whether a response for agreeing to update the connection parameter transmitted by the controlled device is received locally, wherein reaction timing for the connection parameter is carried in the response, and is earlier than default reaction timing.

It is to be noted that reaction timing for the connection parameter is determined by the controlled device in the disclosure.

In view of the fact that reacting timing for the connection parameter is set in the embodiment in a way similar to that as illustrated in Fig. 2-Fig. 4, details will not be described herein again.

At step 503, the Bluetooth remote control device may update, if the response is received, the connection parameter between the Bluetooth remote control device and the controlled device, when the reaction timing for the connection parameter expires.

It can be seen from the above that whether the connection parameter is updated may be determined by detection of remote control mode of the Bluetooth remote control device in the embodiment. Upon detection of a switch of remote control mode, a request for updating the connection parameter may be transmitted to the controlled device immediately and a related conversation from the controlled device may be monitored at every Connection Interval, so that the response speed of the Bluetooth remote control device and the update speed of the connection parameter may be improved.

Corresponding to the method that may be applied to the Bluetooth remote control device illustrated in Fig. 5, a method for updating a connection parameter of a low-power Bluetooth device that may be applied to the controlled device illustrated will be described in the following.

Fig. 6 is another flow diagram illustrating a method for updating a connection parameter of a low-power Bluetooth device according to an exemplary embodiment, wherein the method is applied to a controlled device which is communicatively connected with a Bluetooth remote control device. The method may include the following steps.

At 601, the controlled device may receive a request for updating a connection parameter transmitted by the Bluetooth remote control device.

At 602, the controlled device may transmit, to the Bluetooth remote control device, a response for agreeing to update the connection parameter, based on the request for updating the connection parameter, wherein reaction timing for the connection parameter is carried in the response, and is earlier than default reaction timing.

At 603, the controlled device may update the connection parameter between the controlled device and the Bluetooth remote control device, when the reaction timing for the connection parameter expires.

In the embodiment, the connection parameter may be quickly updated by bringing forward the reaction timing for the connection parameter.

Corresponding to the embodiment for updating a connection parameter of a low-power Bluetooth device as illustrated in Fig. 2 that may be applied to the controlled device, an apparatus for updating a connection parameter of a low-power Bluetooth device that may be applied to the controlled device is also provided in the disclosure.

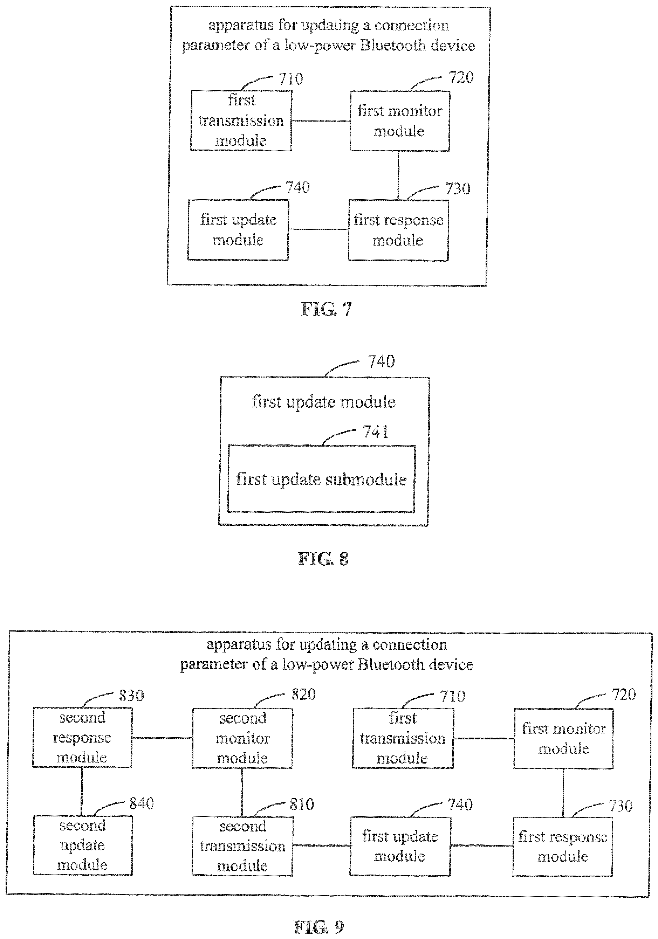

Fig. 7 is a block diagram illustrating an apparatus for updating a connection parameter of a low-power Bluetooth device according to an exemplary embodiment, wherein the apparatus may be applied to a Bluetooth remote control device which is communicatively connected with a controlled device. The apparatus may include:
a first transmission module 710 configured to transmit, to the controlled device, a prompt message indicating a switch of remote control mode in the Bluetooth remote control device, upon detection of a local switch of remote control mode, so that a request for updating a connection parameter is generated by the controlled device based on the prompt message and transmitted to the Bluetooth remote control device, wherein reaction timing for the connection parameter is carried in the request for updating the connection parameter , and is earlier than default reaction timing;
a first monitor module 720 configured to monitor, for every Connection Interval after the local switch of remote control mode, whether the request for updating the connection parameter transmitted by the controlled device is received locally;
a first response module 730 configured to transmit, to the controlled device, a response for agreeing to update the connection parameter, upon detection of the request for updating the connection parameter; and
a first update module 740 configured to update the connection parameter between the Bluetooth remote control device and the controlled device, when the reaction timing for the connection parameter expires.

Since the amounts of data generated by the Bluetooth remote control device in different remote control modes are different, and different amounts of data may require different settings of the connection parameter, whether the connection parameter is updated may be determined by detection of remote control mode of the Bluetooth remote control device in the embodiment. Upon detection of a switch of remote control mode, a related prompt message may be transmitted to the controlled device immediately and a request for updating the connection parameter may be monitored at every Connection Interval, so that the response speed of the Bluetooth remote control device and the update speed of the connection parameter may be improved.

Fig. 8 is another block diagram illustrating an apparatus for updating a connection parameter of a low-power Bluetooth device according to an exemplary embodiment. The first update module 740 as illustrated in Fig. 7 may include:
a first update submodule 741 configured to the Connection Interval between the Bluetooth remote control device and the controlled device to a first predetermined duration, upon detection of a local switch to a voice remote control mode.

Fig. 9 is another block diagram illustrating an apparatus for updating a connection parameter of a low-power Bluetooth device according to an exemplary embodiment, wherein the switch to voice remote control mode is realized by pressing a button for voice control, The apparatus as illustrated in Fig. 8 may further include:
a second transmission module 810 configured to transmit, to the controlled device, a prompt message indicating that the button for voice control has been released, upon detection of a release of the button for voice control, so that a first request for updating the connection parameter to a previous value is generated by the controlled device based on the prompt message and transmitted to the Bluetooth remote control device, wherein reaction timing for the connection parameter is carried in the first request for updating the connection parameter, and is earlier than a default reaction timing;
a second monitor module 820 configured to monitor, for every Connection Interval in a second predetermined duration after the release of the button for voice control, whether the first request transmitted by the controlled device is received locally;
a second response module 830 configured to transmit, to the controlled device, a response for agreeing to update the connection parameter upon detection of the first request; and
a second update module 840 configured to update the connection parameter between the Bluetooth remote control device and the controlled device to the previous value, when the reaction timing for the connection parameter carried in the first request expires.

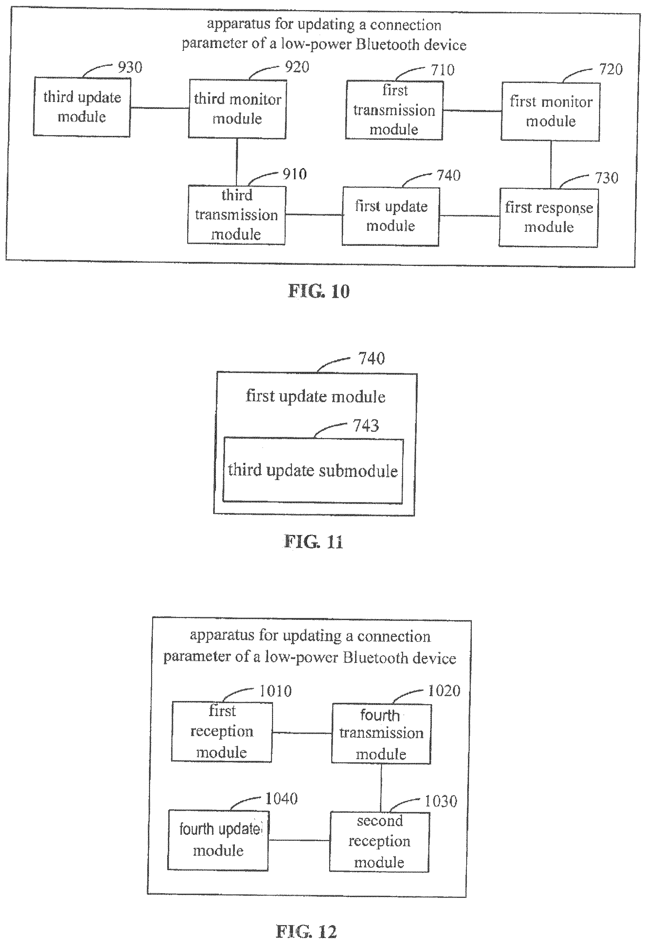

Fig. 10 is another block diagram illustrating an apparatus for updating a connection parameter of a low-power Bluetooth device according to an exemplary embodiment, wherein the switch to voice remote control mode is realized by pressing a button for voice control, The apparatus as illustrated in Fig. 8 may further include:
a third transmission module 910 configured to transmit, to the controlled device, a second request for updating the connection parameter to a preset value upon detection of a release of the button for voice control;
a third monitor module 920 configured to monitor, for every Connection Interval in a second predetermined duration after the release of the button for voice control, whether a response for agreeing to update the connection parameter to the preset value transmitted by the controlled device is received locally, wherein reaction timing for the connection parameter is carried in the response, and is earlier than a default reaction timing;
a third update module 930 configured to update, if the response for agreeing to update the connection parameter to the preset value transmitted by the controlled device is received, the connection parameter between the Bluetooth remote control device and the controlled device to the preset value, when the reaction timing carried in the response expires.

Fig. 11 is another block diagram illustrating an apparatus for updating a connection parameter of a low-power Bluetooth device according to an exemplary embodiment. The first update module as illustrated in Fig. 7 may include:
a third update submodule configured to lengthen the Connection Interval between the Bluetooth remote control device and the controlled device to a second predetermined duration, upon detection of a local switch to a button remote control mode.

Corresponding to the embodiment for updating the connection parameter that may be applied to the controlled device as illustrated in Fig. 4, an apparatus for updating the connection parameter that may be applied to the controlled device is also provided in the disclosure.

Fig. 12 is another block diagram illustrating an apparatus for updating a connection parameter of a low-power Bluetooth device according to an exemplary embodiment, wherein the apparatus may be applied to a controlled device which is communicatively connected with a Bluetooth remote control device. The apparatus may include:
a first reception module 1010 configured to receive a prompt message transmitted by the Bluetooth remote control device, wherein the prompt message indicates a switch of remote control mode in the Bluetooth remote control device;
a fourth transmission module 1020 configured to generate, based on the prompt message, a request for updating a connection parameter and transmitting the request to the Bluetooth remote control device, wherein reaction timing for the connection parameter is carried in the request for updating the connection parameter and is earlier than default reaction timing;
a second reception module 1030 configured to receive a response for agreeing to update the connection parameter transmitted by the Bluetooth remote control device; and
a fourth update module 1040 configured to update the connection parameter between the controlled device and the Bluetooth remote control device, when the reaction timing for the connection parameter expires.

In the embodiment, the connection parameter may be quickly updated by bringing forward the reaction timing for the connection parameter.

Corresponding to the embodiment for updating the connection parameter that may be applied to the Bluetooth remote control device as illustrated in Fig. 5, an apparatus for updating the connection parameter that may be applied to the Bluetooth remote control device is also provided in the disclosure.

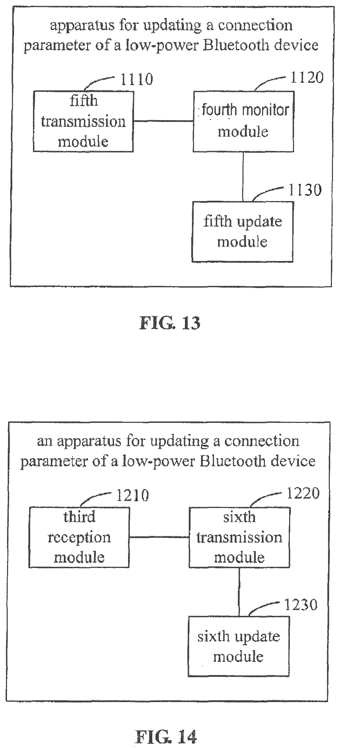

Fig. 13 is another block diagram illustrating an apparatus for updating a connection parameter of a low-power Bluetooth device according to an exemplary embodiment, wherein the apparatus is applied to a Bluetooth remote control device which is communicatively connected with a controlled device. The apparatus may include:
a fifth transmission module 1110 configured to transmit, to the controlled device, a request for updating a connection parameter upon detection of a local switch of remote control mode;
a fourth monitor module 1120 configured to monitor, for every Connection Interval after the local switch of remote control mode, whether a response for agreeing to update the connection parameter transmitted by the controlled device is received locally, wherein reaction timing for the connection parameter is carried in the response, and is earlier than default reaction timing; and
a fifth update module 1130 configured to update if the response is received, the connection parameter between the Bluetooth remote control device and the controlled device, when the reaction timing for the connection parameter expires.

It can be seen from the above embodiments that whether the connection parameter is updated may be determined by detection of remote control mode of the Bluetooth remote control device in the embodiment. Upon detection of a switch of remote control mode, a request for updating the connection parameter may be transmitted to the controlled device immediately and a related conversation from the controlled device may be monitored at every Connection Interval, so that the response speed of the Bluetooth remote control device and the update speed of the connection parameter may be improved.

Corresponding to the embodiment for updating the connection parameter that may be applied to the controlled device as illustrated in Fig. 6, an apparatus for updating the connection parameter that may be applied to the controlled device is also provided in the disclosure.

Fig. 14 is another block diagram illustrating an apparatus for updating a connection parameter of a low-power Bluetooth device according to an exemplary embodiment, wherein the apparatus may be applied to a controlled device which is communicatively connected with a Bluetooth remote control device. The apparatus may include:
a third reception module 1210 configured to receive a request for updating a connection parameter transmitted by the Bluetooth remote control device;
a sixth transmission module 1220 configured to transmit, to the Bluetooth remote control device, a response for agreeing to update the connection parameter, based on the request for updating the connection parameter, wherein reaction timing for the connection parameter is carried in the response, and is earlier than default reaction timing ; and
a sixth update module 1230 configured to update the connection parameter between the controlled device and the Bluetooth remote control device, when the reaction timing for the connection parameter expires.

In the embodiment, the connection parameter may be quickly updated by bringing forward the reaction timing for the connection parameter.

For embodiments of an apparatus, since it substantially corresponds to embodiments of a method, description of a certain part of the method may be referred to for description of a relevant part of the device. The above-described embodiments of a device are for illustrative purposes only, wherein elements described as separate components may or may not be physically separated, and components illustrated as modules may or may not be physical elements (i.e., these components may be located in the same place, or be distributed in several network elements). Part or all of the modules may be selected to realize the purposes of the scheme of this disclosure according to actual needs. Those of ordinary skill in the art may be able to understand and practice the scheme without creative efforts.

Accordingly, an apparatus for updating a connection parameter of a low-power Bluetooth device is provided, including: a processor; a memory for storing processor-executable instructions; wherein the processor is configured to: transmit, to a controlled device, a prompt message indicating a switch of remote control mode in a Bluetooth remote control device, upon detection of a local switch of remote control mode, so that a request for updating a connection parameter is generated by the controlled device based on the prompt message and transmitted to the Bluetooth remote control device, wherein reaction timing for the connection parameter is carried in the request for updating the connection parameter, and is earlier than default reaction timing; monitor, for every Connection Interval after the local switch of remote control mode, whether the request for updating the connection parameter transmitted by the controlled device is received locally; transmit, to the controlled device, a response for agreeing to update the connection parameter, upon detection of the request for updating the connection parameter; and update the connection parameter between the Bluetooth remote control device and the controlled device, when the reaction timing for the connection parameter expires.

Accordingly, an apparatus for updating a connection parameter of a low-power Bluetooth device is provided, including: a processor; a memory for storing processor-executable instructions; wherein the processor is configured to: receive a prompt message transmitted by a Bluetooth remote control device, wherein the prompt message indicates a switch of remote control mode in the Bluetooth remote control device; generate, based on the prompt message, a request for updating a connection parameter and transmit the request to the Bluetooth remote control device, wherein reaction timing for the connection parameter is carried in the request for updating the connection parameter , and is earlier than default reaction timing; receive a response for agreeing to update the connection parameter transmitted by the Bluetooth remote control device; and update the connection parameter between a controlled device and the Bluetooth remote control device, when the reaction timing for the connection parameter expires.

Accordingly, an apparatus for updating a connection parameter of a low-power Bluetooth device is provided, including: a processor; a memory for storing processor-executable instructions; wherein the processor is configured to: transmit, to a controlled device, a request for updating a connection parameter, upon detection of a local switch of remote control mode; monitor, for every Connection Interval after the local switch of remote control mode, whether a response for agreeing to update the connection parameter transmitted by the controlled device is received locally, wherein reaction timing for the connection parameter is carried in the response, and is earlier than default reaction timing; and update, if the response is received, the connection parameter between the Bluetooth remote control device and the controlled device, when the reaction timing for the connection parameter expires.

Accordingly, an apparatus for updating a connection parameter of a low-power Bluetooth device is provided, including: a processor; a memory for storing processor-executable instructions; wherein the processor is configured to: receive a request for updating a connection parameter transmitted by a Bluetooth remote control device; transmit, to the Bluetooth remote control device, a response for agreeing to update the connection parameter, based on the request for updating the connection parameter, wherein reaction timing for the connection parameter is carried in the response, and is earlier than default reaction timing; and update the connection parameter between a controlled device and the Bluetooth remote control device, when the reaction timing for the connection parameter expires.

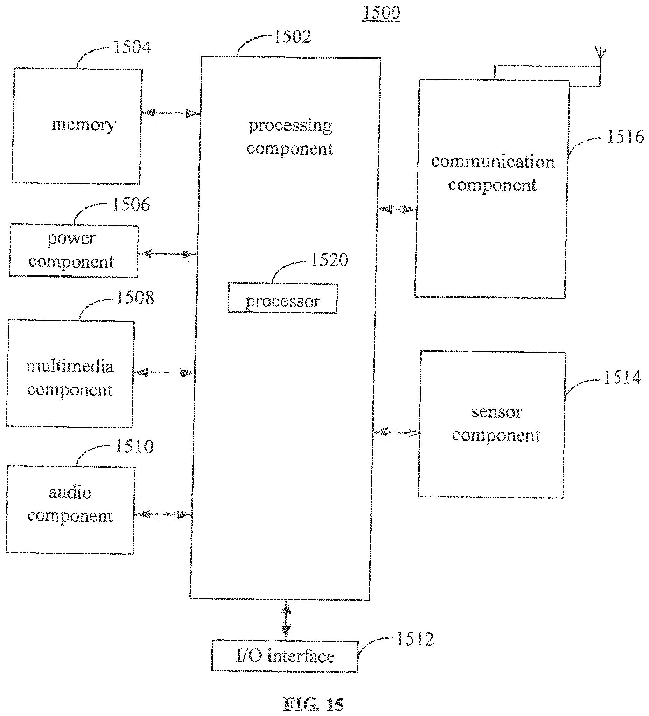

Fig. 15 is a structure block diagram illustrating an apparatus 1500 used for updating a connection parameter of a low-power Bluetooth device according to an exemplary embodiment. For example, the apparatus may be a mobile phone, a computer, a digital broadcasting terminal, a messaging device, a game console, a tablet device, a medical equipment, a fitness equipment, a personal digital assistant, an aircraft and the like.

Referring to Fig. 15, the device 1500 may include one or more of the following components: a processing component 1502, a memory 1504, a power component 1506, a multimedia component 1508, an audio component 1510, an input/output (I/O) interface 1512, a sensor component 1514, and a communication component 1516.

The processing component 1502 typically controls overall operations of the device 1500, such as the operations associated with display, telephone calls, data communications, camera operations, and recording operations. The processing component 1502 may include one or more processors 1520 to execute instructions to perform all or part of the steps in the above described methods. Moreover, the processing component 1502 may include one or more modules which facilitate the interaction between the processing component 1502 and other components. For instance, the processing component 1502 may include a multimedia module to facilitate the interaction between the multimedia component 1508 and the processing component 1502.

The memory 1504 is configured to store various types of data to support the operation of the device 1500. Examples of such data include instructions for any applications or methods operated on the device 1500, contact data, phonebook data, messages, pictures, video, etc. The memory 1504 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1506 provides power to various components of the device 1500. The power component 1506 may include a power management system, one or more power sources, and any other components associated with the generation, management, and distribution of power in the device 1500.

The multimedia component 1508 includes a screen providing an output interface between the device 1500 and the user. In some embodiments, the screen may include a liquid crystal display and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 1508 includes a front camera and/or a rear camera. The front camera and the rear camera may receive an external multimedia datum while the device 1500 is in an operation mode, such as a photographing mode or a video mode. Each of the front camera and the rear camera may be a fixed optical lens system or have focus and optical zoom capability.

The audio component 1510 is configured to output and/or input audio signals. For example, the audio component 1510 includes a microphone ("MIC") configured to receive an external audio signal when the device 1500 is in an operation mode, such as a call mode, a recording mode, and a voice recognition mode. The received audio signal may be further stored in the memory 1504 or transmitted via the communication component 1516. In some embodiments, the audio component 1510 further includes a speaker to output audio signals.

The I/O interface 1512 provides an interface between the processing component 1502 and peripheral interface modules, such as a keyboard, a click wheel, buttons, and the like. The buttons may include, but are not limited to, a home button, a volume button, a starting button, and a locking button.

The sensor component 1514 includes one or more sensors to provide status assessments of various aspects of the device 1500. For instance, the sensor component 1514 may detect an open/closed status of the device 1500, relative positioning of components, e.g., the display and the keypad, of the device 1500, a change in position of the device 1500 or a component of the device 1500, a presence or absence of user contact with the device 1500, an orientation or an acceleration/deceleration of the device 1500, and a change in temperature of the device 1500. The sensor component 1514 may include a proximity sensor configured to detect the presence of nearby objects without any physical contact. The sensor component 1514 may also include a light sensor, such as a CMOS or CCD image sensor, for use in imaging applications. In some embodiments, the sensor component 1514 may also include an accelerometer sensor, a gyroscope sensor, a magnetic sensor, a pressure sensor, or a temperature sensor.

The communication component 1516 is configured to facilitate communication, wired or wirelessly, between the device 1500 and other devices. The device 1500 can access a wireless network based on a communication standard, such as WiFi, 2G, or 3Q or a combination thereof. In one exemplary embodiment, the communication component 1516 receives a broadcast signal or broadcast associated information from an external broadcast management system via a broadcast channel. In one exemplary embodiment, the communication component 1516 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 1500 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as included in the memory 1504, executable by the processor 1520 in the device 1500, for performing the above-described methods. For example, the non-transitory computer-readable storage medium may be a ROM, a RAM, a CD-ROM, a magnetic tape, a floppy disc, an optical data storage device, and the like.

Although features and elements are described above in particular combinations, one of ordinary skill in the art will appreciate that each feature or element may be used alone, or in any combination with the other feature and elements if no contradiction exists.

Other embodiments of the invention will be apparent to those skilled in the art from consideration of the specification and practice of the disclosures herein. This application is intended to cover any variations, uses, or adaptations of the disclosure following the general principles thereof and including such departures from the present disclosure as come within known or customary practice in the art. It is intended that the specification and examples be considered as exemplary only, with a true scope of the invention being indicated by the following claims.

It will be appreciated that the inventive concept is not limited to the exact construction that has been described above and illustrated in the accompanying drawings, and that various modifications and changes can be made without departing from the scope thereof. It is intended that the scope of the invention only be limited by the appended claims.

The above description may be regarded as preferred embodiments of the disclosure only, and is not intended to limit the scope of the invention which is defined by the claims.

## Claims

1. A method for updating a connection parameter between a low-power Bluetooth remote control device and a Bluetooth controlled device that is communicatively connected with the low-power Bluetooth remote control device, the method is performed in the low-power Bluetooth remote control device and **characterised by** comprising:
transmitting (201), to the Bluetooth controlled device, a prompt message indicating a switch of remote control mode in the low-power Bluetooth remote control device, upon detection of a local switch of remote control mode, so that a request for updating a connection parameter is generated by the Bluetooth controlled device based on the prompt message and transmitted to the low-power Bluetooth remote control device, wherein reaction timing for updating the connection parameter is carried in the request for updating the connection parameter, and is earlier than default reaction timing initially set in the low-power Bluetooth remote control device;
monitoring (202), for every Connection Interval after the local switch of remote control mode, whether the request for updating the connection parameter transmitted by the Bluetooth controlled device is received locally;
transmitting (203), to the Bluetooth controlled device, a response for agreeing to update the connection parameter, upon detection of the request for updating the connection parameter; and
updating (204) the connection parameter between the low-power Bluetooth remote control device and the Bluetooth controlled device, when the reaction timing for updating the connection parameter expires,
wherein the Connection Interval between the low-power Bluetooth remote control device and the Bluetooth controlled device is shortened upon detection of a local switch to a voice remote control mode, and is lengthened upon detection of a local switch to a button remote control mode.

2. The method according to claim 1, wherein the switch to the voice remote control mode is realized by pressing a button for voice control, the method further comprises:
transmitting (301), to the Bluetooth controlled device, a prompt message indicating that the button for voice control has been released, upon detection of a release of the button for voice control, so that a first request for updating the connection parameter to a previous value is generated by the Bluetooth controlled device based on the prompt message and transmitted to the low-power Bluetooth remote control device, wherein reaction timing for updating the connection parameter is carried in the first request for updating the connection parameter, and is earlier than a default reaction timing;
monitoring (302), for every Connection Interval in a second predetermined duration after the release of the button for voice control, whether the first request transmitted by the Bluetooth controlled device is received locally;
transmitting (303), to the Bluetooth controlled device, a response for agreeing to update the connection parameter, upon detection of the first request; and
updating (304) the connection parameter between the low-power Bluetooth remote control device and the Bluetooth controlled device to the previous value, when the reaction timing for updating the connection parameter carried in the first request expires.

3. The method according to claim 1, wherein the switch to the voice remote control mode is realized by pressing a button for voice control, the method further comprises:
transmitting, to the Bluetooth controlled device, a second request for updating the connection parameter to a preset value, upon detection of a release of the button for voice control;
monitoring, for every Connection Interval in a second predetermined duration after the release of the button for voice control, whether a response for agreeing to update the connection parameter to the preset value transmitted by the Bluetooth controlled device is received locally, wherein reaction timing for updating the connection parameter is carried in the response, and is earlier than a default reaction timing;
updating, if the response for agreeing to update the connection parameter to the preset value transmitted by the Bluetooth controlled device is received, the connection parameter between the low-power Bluetooth remote control device and the Bluetooth controlled device to the preset value, when the reaction timing carried in the response expires.

4. A method for updating a connection parameter between a low-power Bluetooth remote control device and a Bluetooth controlled device which is communicatively connected with the Bluetooth Bluetooth remote control device, the method is performed in the low-power Bluetooth remote control device and **characterised by** comprising:
transmitting (501), to the Bluetooth controlled device, a request for updating a connection parameter, upon detection of a local switch of remote control mode;
monitoring (502), for every Connection Interval after the local switch of remote control mode, whether a response for agreeing to update the connection parameter transmitted by the Bluetooth controlled device is received locally, wherein reaction timing for updating the connection parameter is carried in the response, and is earlier than default reaction timing initially set in the low-power Bluetooth remote control device; and
updating (503), if the response is received, the connection parameter between the low-power Bluetooth remote control device and the Bluetooth controlled device, when the reacting timing for updating the connection parameter expires,
wherein the Connection Interval between the low-power Bluetooth remote control device and the Bluetooth controlled device is shortened upon detection of a local switch to a voice remote control mode, and is lengthened upon detection of a local switch to a button remote control mode.

5. An apparatus for updating a connection parameter between a low-power Bluetooth remote control device and a Bluetooth controlled device which is communicatively connected with the low-power Bluetooth remote control device, the apparatus is within the low-power Bluetooth remote control device and **characterised by** comprising:
a first transmission module (710) configured to transmit, to the Bluetooth controlled device, a prompt message indicating a switch of remote control mode in the low-power Bluetooth remote control device, upon detection of a local switch of remote control mode, so that a request for updating a connection parameter is generated by the Bluetooth controlled device based on the prompt message and transmitted to the low-power Bluetooth remote control device, wherein reaction timing for updating the connection parameter is carried in the request for updating the connection parameter, and is earlier than default reaction timing initially set in the low-power Bluetooth remote control device;
a first monitor module (720) configured to monitor, for every Connection Interval after the local switch of remote control mode, whether the request for updating the connection parameter transmitted by the Bluetooth controlled device is received locally;
a first response module (730) configured to transmit, to the Bluetooth controlled device, a response for agreeing to update the connection parameter, upon detection of the request for updating the connection parameter; and
a first update module (740) configured to update the connection parameter between the low-power Bluetooth remote control device and the Bluetooth controlled device, when the reaction timing for updating the connection parameter expires,
wherein the first update module (740) comprises: a first update submodule (741) configured to shorten the Connection Interval between the low-power Bluetooth remote control device and the Bluetooth controlled device to a first predetermined duration, upon detection of a local switch to a voice remote control mode; and
wherein the first update module (740) comprises: a third update submodule (743) configured to lengthen the Connection Interval between the low-power Bluetooth remote control device and the Bluetooth controlled device to a second predetermined duration, upon detection of a local switch to a button remote control mode.

6. The apparatus according to claim 5, wherein the switch to the voice remote control mode is realized by pressing a button for voice control, the apparatus further comprises:
a second transmission module (810) configured to transmit, to the Bluetooth controlled device, a prompt message indicating that the button for voice control has been released, upon detection of a release of the button for voice control, so that a first request for updating the connection parameter to a previous value is generated by the Bluetooth controlled device based on the prompt message and transmitted to the low-power Bluetooth remote control device, wherein reaction timing for the connection parameter is carried in the first request for updating the connection parameter, and is earlier than a default reaction timing ;
a second monitor module (820) configured to monitor, for every Connection Interval in a second predetermined duration after the release of the button for voice control, whether the first request transmitted by the Bluetooth controlled device is received locally;
a second response module (830) configured to transmit, to the Bluetooth controlled device, a response for agreeing to update the connection parameter upon detection of the first request; and
a second update module (840) configured to update the connection parameter between the low-power Bluetooth remote control device and the Bluetooth controlled device to the previous value, when the reaction timing for updating the connection parameter carried in the first request expires.

7. An apparatus for updating a connection parameter between a low-power Bluetooth remote control device and a Bluetooth controlled device which is communicatively connected with the low-power Bluetooth remote control device, the apparatus is within the low-power Bluetooth remote control device and **characterised by** comprising:
a transmission module (1110) configured to transmit, to the Bluetooth controlled device, a request for updating a connection parameter upon detection of a local switch of remote control mode;
a monitor module (1120) configured to monitor, for every Connection Interval after the local switch of remote control mode, whether a response for agreeing to update the connection parameter transmitted by the Bluetooth controlled device is received locally, wherein reaction timing for updating the connection parameter is carried in the response, and is earlier than default reaction timing initially set in the low-power Bluetooth remote control device; and
an update module (1130) configured to update if the response is received, the connection parameter between the low-power Bluetooth remote control device and the Bluetooth controlled device, when the reaction timing for updating the connection parameter expires,
wherein the first update module (740) comprises: a first update submodule (741) configured to shorten the Connection Interval between the low-power Bluetooth remote control device and the Bluetooth controlled device to a first predetermined duration, upon detection of a local switch to a voice remote control mode; and
wherein the first update module (740) comprises: a third update submodule (743) configured to lengthen the Connection Interval between the low-power Bluetooth remote control device and the Bluetooth controlled device to a second predetermined duration, upon detection of a local switch to a button remote control mode.

8. An apparatus for updating a connection parameter between a low-power Bluetooth remote control device and a Bluetooth controlled device which is communicatively connected with the low-power Bluetooth remote control device, the apparatus is within the low-power Bluetooth remote control device and **characterised by** comprising:
a processor (1520);
a memory (1504) for storing processor-executable instructions;
wherein the processor is configured to:
transmit, to a Bluetooth controlled device, a prompt message indicating a switch of remote control mode in a low-power Bluetooth remote control device, upon detection of a local switch of remote control mode, so that a request for updating a connection parameter is generated by the Bluetooth controlled device based on the prompt message and transmitted to the low-power Bluetooth remote control device, wherein reaction timing for updating the connection parameter is carried in the request for updating the connection parameter, and is earlier than default reaction timing initially set in the low-power Bluetooth remote control device;
monitor, for every Connection Interval after the local switch of remote control mode, whether the request for updating the connection parameter transmitted by the Bluetooth controlled device is received locally;
transmit, to the Bluetooth controlled device, a response for agreeing to update the connection parameter, upon detection of the request for updating the connection parameter; and
update the connection parameter between the low-power Bluetooth remote control device and the Bluetooth controlled device, when the reaction timing for updating the connection parameter expires,
wherein the Connection Interval between the low-power Bluetooth remote control device and the Bluetooth controlled device is shortened upon detection of a local switch to a voice remote control mode, and is lengthened upon detection of a local switch to a button remote control mode.

9. An apparatus for updating a connection parameter between a low-power Bluetooth remote control device and a Bluetooth controlled device which is communicatively connected with the low-power Bluetooth remote control device, the apparatus is within the low-power Bluetooth remote control device and **characterised by** comprising:
a processor (1520);
a memory (1504) for storing processor-executable instructions;
wherein the processor is configured to:
transmit, to a Bluetooth controlled device, a request for updating the connection parameter, upon detection of a local switch of remote control mode;
monitor, for every Connection Interval after the local switch of remote control mode, whether a response for agreeing to update the connection parameter transmitted by the Bluetooth controlled device is received locally, wherein reaction timing for updating the connection parameter is carried in the response, and is earlier than default reaction timing initially set in the low-power Bluetooth remote control device; and
update, if the response is received, the connection parameter between the low-power Bluetooth remote control device and the Bluetooth controlled device, when the reaction timing for updating the connection parameter expires,
wherein the Connection Interval between the low-power Bluetooth remote control device and the Bluetooth controlled device is shortened upon detection of a local switch to a voice remote control mode, and is lengthened upon detection of a local switch to a button remote control mode.

10. A computer program including instructions for executing the steps of a method for monitoring traffic according to any one of claims 1 to 4 when said program is executed by a computer.

11. A recording medium readable by a computer and having recorded thereon a computer program including instructions for executing the steps of a method for monitoring traffic according to any one of claims 1 to 4.

## Patentansprüche

1. Verfahren zum Aktualisieren eines Verbindungsparameters zwischen einer Bluetooth-Fernsteuervorrichtung mit geringer Leistung und einer Bluetooth-gesteuerten Vorrichtung, die kommunikationsmäßig mit der Bluetooth-Fernsteuervorrichtung mit geringer Leistung verbunden ist, das Verfahren in der Bluetooth-Fernsteuervorrichtung mit geringer Leistung durchgeführt wird und **dadurch gekennzeichnet ist, dass** es umfasst:
Übertragen (201) einer Eingabeaufforderungsnachricht, die eine Umschaltung des Fernsteuermodus in der Bluetooth-Fernsteuervorrichtung mit geringer Leistung anzeigt, bei Erkennen einer lokalen Umschaltung des Fernsteuermodus an die Bluetooth-gesteuerte Vorrichtung, sodass auf Basis der Eingabeaufforderungsnachricht eine Anforderung zum Aktualisieren eines Verbindungsparameters von der Bluetooth-gesteuerten Vorrichtung erzeugt und an die Bluetooth-Fernsteuervorrichtung mit geringer Leistung übertragen wird, wobei Reaktionszeit zum Aktualisieren des Verbindungsparameters in der Anforderung zum Aktualisieren des Verbindungsparameters übermittelt wird und früher ist als ursprünglich in der Bluetooth-Fernsteuervorrichtung mit geringer Leistung eingestellte Standard-Reaktionszeit;
Überwachen (202), für jedes Verbindungsintervall nach der lokalen Umschaltung des Fernsteuermodus, ob die von der Bluetooth-gesteuerten Vorrichtung übertragene Anforderung zum Aktualisieren des Verbindungsparameters lokal empfangen wird;
Übertragen (203), bei Erkennen der Anforderung zum Aktualisieren des Verbindungsparameters, einer Antwort zum Einwilligen in Aktualisierung des Verbindungsparameters an die Bluetooth-gesteuerte Vorrichtung; und
Aktualisieren (204) des Verbindungsparameters zwischen der Bluetooth-Fernsteuervorrichtung mit geringer Leistung und der Bluetooth-gesteuerten Vorrichtung, wenn die Reaktionszeit zum Aktualisieren des Verbindungsparameters abläuft,
wobei das Verbindungsintervall zwischen der Bluetooth-Fernsteuervorrichtung mit geringer Leistung und der Bluetooth-gesteuerten Vorrichtung bei Erkennen einer lokalen Umschaltung auf einen Sprach-Fernsteuermodus verkürzt wird, und bei Erkennen einer lokalen Umschaltung auf einen Tasten-Fernsteuermodus verlängert wird.

2. Verfahren nach Anspruch 1, wobei die Umschaltung auf den Sprach-Fernsteuermodus durch Drücken einer Taste für Sprachsteuerung ausgeführt wird, das Verfahren weiter umfasst:
Übertragen (301) einer Eingabeaufforderungsnachricht, die anzeigt, dass die Taste für Sprachsteuerung losgelassen wurde, an die Bluetooth-gesteuerte Vorrichtung bei Erkennen eines Loslassens der Taste für Sprachsteuerung, sodass auf Basis der Eingabeaufforderungsnachricht eine erste Anforderung zum Aktualisieren des Verbindungsparameters auf einen vorhergehenden Wert von der Bluetooth-gesteuerten Vorrichtung erzeugt und an die Bluetooth-Fernsteuervorrichtung mit geringer Leistung übertragen wird, wobei Reaktionszeit zum Aktualisieren des Verbindungsparameters in der ersten Anforderung zum Aktualisieren des Verbindungsparameters übermittelt wird und früher ist als eine Standard-Reaktionszeit;
Überwachen (302), für jedes Verbindungsintervall in einer zweiten vorbestimmten Dauer nach dem Loslassen der Taste für Sprachsteuerung, ob die von der Bluetooth-gesteuerten Vorrichtung übertragene erste Anforderung lokal empfangen wird;
Übertragen (303), bei Erkennen der ersten Anforderung, einer Antwort zum Einwilligen in Aktualisierung des Verbindungsparameters an die Bluetooth-gesteuerte Vorrichtung; und
Aktualisieren (304) des Verbindungsparameters zwischen der Bluetooth-Fernsteuervorrichtung mit geringer Leistung und der Bluetooth-gesteuerten Vorrichtung auf den vorhergehenden Wert, wenn die in der ersten Anforderung übermittelte Reaktionszeit zum Aktualisieren des Verbindungsparameters abläuft.

3. Verfahren nach Anspruch 1, wobei die Umschaltung auf den Sprach-Fernsteuermodus durch Drücken einer Taste für Sprachsteuerung ausgeführt wird, das Verfahren weiter umfasst:
Übertragen einer zweiten Anforderung zum Aktualisieren des Verbindungsparameters auf einen voreingestellten Wert an die Bluetooth-gesteuerte Vorrichtung bei Erkennen eines Loslassens der Taste für Sprachsteuerung;
Überwachen, für jedes Verbindungsintervall in einer zweiten vorbestimmten Dauer nach dem Loslassen der Taste für Sprachsteuerung, ob eine von der Bluetooth-gesteuerten Vorrichtung übertragene Antwort zum Einwilligen in Aktualisierung des Verbindungsparameters auf den voreingestellten Wert lokal empfangen wird, wobei Reaktionszeit zum Aktualisieren des Verbindungsparameters in der Antwort übermittelt wird und früher ist als eine Standard-Reaktionszeit;
wenn die von der Bluetooth-gesteuerten Vorrichtung übertragene Antwort zum Einwilligen in Aktualisierung des Verbindungsparameters auf den voreingestellten Wert empfangen wird, Aktualisieren des Verbindungsparameters zwischen der Bluetooth-Fernsteuervorrichtung mit geringer Leistung und der Bluetooth-gesteuerten Vorrichtung auf den voreingestellten Wert, wenn die in der Antwort übermittelte Reaktionszeit abläuft.

4. Verfahren zum Aktualisieren eines Verbindungsparameters zwischen einer Bluetooth-Fernsteuervorrichtung mit geringer Leistung und einer Bluetooth-gesteuerten Vorrichtung, die kommunikationsmäßig mit der Bluetooth Bluetooth-Fernsteuervorrichtung verbunden ist, das Verfahren in der Bluetooth-Fernsteuervorrichtung mit geringer Leistung durchgeführt wird und **dadurch gekennzeichnet ist, dass** es umfasst:
Übertragen (501), bei Erkennen einer lokalen Umschaltung des Fernsteuermodus, einer Anforderung zum Aktualisieren eines Verbindungsparameters an die Bluetooth-gesteuerte Vorrichtung;
Überwachen (502), für jedes Verbindungsintervall nach der lokalen Umschaltung des Fernsteuermodus, ob eine von der Bluetooth-gesteuerten Vorrichtung übertragene Antwort zum Einwilligen in Aktualisierung des Verbindungsparameters lokal empfangen wird, wobei Reaktionszeit zum Aktualisieren des Verbindungsparameters in der Antwort übermittelt wird und früher ist als ursprünglich in der Bluetooth-Fernsteuervorrichtung mit geringer Leistung eingestellte Standard-Reaktionszeit; und
wenn die Antwort empfangen wird, Aktualisieren (503) des Verbindungsparameters zwischen der Bluetooth-Fernsteuervorrichtung mit geringer Leistung und der Bluetooth-gesteuerten Vorrichtung, wenn die Reaktionszeit zum Aktualisieren des Verbindungsparameters abläuft,
wobei das Verbindungsintervall zwischen der Bluetooth-Fernsteuervorrichtung mit geringer Leistung und der Bluetooth-gesteuerten Vorrichtung bei Erkennen einer lokalen Umschaltung auf einen Sprach-Fernsteuermodus verkürzt wird, und bei Erkennen einer lokalen Umschaltung auf einen Tasten-Fernsteuermodus verlängert wird.

5. Vorrichtung zum Aktualisieren eines Verbindungsparameters zwischen einer Bluetooth-Fernsteuervorrichtung mit geringer Leistung und einer Bluetooth-gesteuerten Vorrichtung, die kommunikationsmäßig mit der Bluetooth-Fernsteuervorrichtung mit geringer Leistung verbunden ist, sich die Vorrichtung innerhalb der Bluetooth-Fernsteuervorrichtung mit geringer Leistung befindet und **dadurch gekennzeichnet ist, dass** sie umfasst:
ein erstes Übertragungsmodul (710), das dazu konfiguriert ist, eine Eingabeaufforderungsnachricht, die eine Umschaltung des Fernsteuermodus in der Bluetooth-Fernsteuervorrichtung mit geringer Leistung anzeigt, bei Erkennen einer lokalen Umschaltung des Fernsteuermodus an die Bluetooth-gesteuerte Vorrichtung zu übertragen, sodass auf Basis der Eingabeaufforderungsnachricht eine Anforderung zum Aktualisieren eines Verbindungsparameters von der Bluetooth-gesteuerten Vorrichtung erzeugt und an die Bluetooth-Fernsteuervorrichtung mit geringer Leistung übertragen wird, wobei Reaktionszeit zum Aktualisieren des Verbindungsparameters in der Anforderung zum Aktualisieren des Verbindungsparameters übermittelt wird und früher ist als ursprünglich in der Bluetooth-Fernsteuervorrichtung mit geringer Leistung eingestellte Standard-Reaktionszeit;
ein erstes Überwachungsmodul (720), das dazu konfiguriert ist, für jedes Verbindungsintervall nach der lokalen Umschaltung des Fernsteuermodus zu überwachen, ob die von der Bluetooth-gesteuerten Vorrichtung übertragene Anforderung zum Aktualisieren des Verbindungsparameters lokal empfangen wird;
ein erstes Antwortmodul (730), das dazu konfiguriert ist, bei Erkennen der Anforderung zum Aktualisieren des Verbindungsparameters eine Antwort zum Einwilligen in Aktualisierung des Verbindungsparameters an die Bluetooth-gesteuerte Vorrichtung zu übertragen; und
ein erstes Aktualisierungsmodul (740), das dazu konfiguriert ist, den Verbindungsparameter zwischen der Bluetooth-Fernsteuervorrichtung mit geringer Leistung und der Bluetooth-gesteuerten Vorrichtung zu aktualisieren, wenn die Reaktionszeit zum Aktualisieren des Verbindungsparameters abläuft,
wobei das erste Aktualisierungsmodul (740) umfasst: ein erstes Aktualisierungs-Submodul (741), das dazu konfiguriert ist, das Verbindungsintervall zwischen der Bluetooth-Fernsteuervorrichtung mit geringer Leistung und der Bluetooth-gesteuerten Vorrichtung bei Erkennen einer lokalen Umschaltung auf einen Sprach-Fernsteuermodus auf eine erste vorbestimmte Dauer zu verkürzen; und
wobei das erste Aktualisierungsmodul (740) umfasst: ein drittes Aktualisierungs-Submodul (743), das dazu konfiguriert ist, das Verbindungsintervall zwischen der Bluetooth-Fernsteuervorrichtung mit geringer Leistung und der Bluetooth-gesteuerten Vorrichtung bei Erkennen einer lokalen Umschaltung auf einen Tasten-Fernsteuermodus auf eine zweite vorbestimmte Dauer zu verlängern.

6. Vorrichtung nach Anspruch 5, wobei die Umschaltung auf den Sprach-Fernsteuermodus durch Drücken einer Taste für Sprachsteuerung ausgeführt wird, die Vorrichtung weiter umfasst:
ein zweites Übertragungsmodul (810), das dazu konfiguriert ist, eine Eingabeaufforderungsnachricht, die anzeigt, dass die Taste für Sprachsteuerung losgelassen wurde, bei Erkennen eines Loslassens der Taste für Sprachsteuerung an die Bluetooth-gesteuerte Vorrichtung zu übertragen, sodass auf Basis der Eingabeaufforderungsnachricht eine erste Anforderung zum Aktualisieren des Verbindungsparameters auf einen vorhergehenden Wert von der Bluetooth-gesteuerten Vorrichtung erzeugt und an die Bluetooth-Fernsteuervorrichtung mit geringer Leistung übertragen wird, wobei Reaktionszeit für den Verbindungsparameter in der ersten Anforderung zum Aktualisieren des Verbindungsparameters übermittelt wird und früher ist als eine Standard-Reaktionszeit;
ein zweites Überwachungsmodul (820), das dazu konfiguriert ist, für jedes Verbindungsintervall in einer zweiten vorbestimmten Dauer nach dem Loslassen der Taste für Sprachsteuerung zu überwachen, ob die von der Bluetooth-gesteuerten Vorrichtung übertragene erste Anforderung lokal empfangen wird;
ein zweites Antwortmodul (830), das dazu konfiguriert ist, bei Erkennen der ersten Anforderung eine Antwort zum Einwilligen in Aktualisierung des Verbindungsparameters an die Bluetooth-gesteuerte Vorrichtung zu übertragen; und
ein zweites Aktualisierungsmodul (840), das dazu konfiguriert ist, den Verbindungsparameter zwischen der Bluetooth-Fernsteuervorrichtung mit geringer Leistung und der Bluetooth-gesteuerten Vorrichtung auf den vorhergehenden Wert zu aktualisieren, wenn die in der ersten Anforderung übermittelte Reaktionszeit zum Aktualisieren des Verbindungsparameters abläuft.

7. Vorrichtung zum Aktualisieren eines Verbindungsparameters zwischen einer Bluetooth-Fernsteuervorrichtung mit geringer Leistung und einer Bluetooth-gesteuerten Vorrichtung, die kommunikationsmäßig mit der Bluetooth-Fernsteuervorrichtung mit geringer Leistung verbunden ist, sich die Vorrichtung innerhalb der Bluetooth-Fernsteuervorrichtung mit geringer Leistung befindet und **dadurch gekennzeichnet ist, dass** sie umfasst:
ein Übertragungsmodul (1110), das dazu konfiguriert ist, bei Erkennen einer lokalen Umschaltung des Fernsteuermodus eine Anforderung zum Aktualisieren eines Verbindungsparameters an die Bluetooth-gesteuerte Vorrichtung zu übertragen;
ein Überwachungsmodul (1120), das dazu konfiguriert ist, für jedes Verbindungsintervall nach der lokalen Umschaltung des Fernsteuermodus zu überwachen, ob eine von der Bluetooth-gesteuerten Vorrichtung übertragene Antwort zum Einwilligen in Aktualisierung des Verbindungsparameters lokal empfangen wird, wobei Reaktionszeit zum Aktualisieren des Verbindungsparameters in der Antwort übermittelt wird und früher ist als ursprünglich in der Bluetooth-Fernsteuervorrichtung mit geringer Leistung eingestellte Standard-Reaktionszeit; und
ein Aktualisierungsmodul (1130), das dazu konfiguriert ist, wenn die Antwort empfangen wird, den Verbindungsparameter zwischen der Bluetooth-Fernsteuervorrichtung mit geringer Leistung und der Bluetooth-gesteuerten Vorrichtung zu aktualisieren, wenn die Reaktionszeit zum Aktualisieren des Verbindungsparameters abläuft,
wobei das erste Aktualisierungsmodul (740) umfasst: ein erstes Aktualisierungs-Submodul (741), das dazu konfiguriert ist, das Verbindungsintervall zwischen der Bluetooth-Fernsteuervorrichtung mit geringer Leistung und der Bluetooth-gesteuerten Vorrichtung bei Erkennen einer lokalen Umschaltung auf einen Sprach-Fernsteuermodus auf eine erste vorbestimmte Dauer zu verkürzen; und
wobei das erste Aktualisierungsmodul (740) umfasst: ein drittes Aktualisierungs-Submodul (743), das dazu konfiguriert ist, das Verbindungsintervall zwischen der Bluetooth-Fernsteuervorrichtung mit geringer Leistung und der Bluetooth-gesteuerten Vorrichtung bei Erkennen einer lokalen Umschaltung auf einen Tasten-Fernsteuermodus auf eine zweite vorbestimmte Dauer zu verlängern.

8. Vorrichtung zum Aktualisieren eines Verbindungsparameters zwischen einer Bluetooth-Fernsteuervorrichtung mit geringer Leistung und einer Bluetooth-gesteuerten Vorrichtung, die kommunikationsmäßig mit der Bluetooth-Fernsteuervorrichtung mit geringer Leistung verbunden ist, sich die Vorrichtung innerhalb der Bluetooth-Fernsteuervorrichtung mit geringer Leistung befindet und **dadurch gekennzeichnet ist, dass** sie umfasst:
einen Prozessor (1520);
einen Speicher (1504) zum Speichern von prozessorausführbaren Anweisungen;
wobei der Prozessor dazu konfiguriert ist:
eine Eingabeaufforderungsnachricht, die eine Umschaltung des Fernsteuermodus in einer Bluetooth-Fernsteuervorrichtung mit geringer Leistung anzeigt, bei Erkennen einer lokalen Umschaltung des Fernsteuermodus an eine Bluetooth-gesteuerte Vorrichtung zu übertragen, sodass auf Basis der Eingabeaufforderungsnachricht eine Anforderung zum Aktualisieren eines Verbindungsparameters von der Bluetooth-gesteuerten Vorrichtung erzeugt und an die Bluetooth-Fernsteuervorrichtung mit geringer Leistung übertragen wird, wobei Reaktionszeit zum Aktualisieren des Verbindungsparameters in der Anforderung zum Aktualisieren des Verbindungsparameters übermittelt wird und früher ist als ursprünglich in der Bluetooth-Fernsteuervorrichtung mit geringer Leistung eingestellte Standard-Reaktionszeit;
für jedes Verbindungsintervall nach der lokalen Umschaltung des Fernsteuermodus zu überwachen, ob die von der Bluetooth-gesteuerten Vorrichtung übertragene Anforderung zum Aktualisieren des Verbindungsparameters lokal empfangen wird;
bei Erkennen der Anforderung zum Aktualisieren des Verbindungsparameters eine Antwort zum Einwilligen in Aktualisierung des Verbindungsparameters an die Bluetooth-gesteuerte Vorrichtung zu übertragen; und
den Verbindungsparameter zwischen der Bluetooth-Fernsteuervorrichtung mit geringer Leistung und der Bluetooth-gesteuerten Vorrichtung zu aktualisieren, wenn die Reaktionszeit zum Aktualisieren des Verbindungsparameters abläuft,
wobei das Verbindungsintervall zwischen der Bluetooth-Fernsteuervorrichtung mit geringer Leistung und der Bluetooth-gesteuerten Vorrichtung bei Erkennen einer lokalen Umschaltung auf einen Sprach-Fernsteuermodus verkürzt wird, und bei Erkennen einer lokalen Umschaltung auf einen Tasten-Fernsteuermodus verlängert wird.

9. Vorrichtung zum Aktualisieren eines Verbindungsparameters zwischen einer Bluetooth-Fernsteuervorrichtung mit geringer Leistung und einer Bluetooth-gesteuerten Vorrichtung, die kommunikationsmäßig mit der Bluetooth-Fernsteuervorrichtung mit geringer Leistung verbunden ist, sich die Vorrichtung innerhalb der Bluetooth-Fernsteuervorrichtung mit geringer Leistung befindet und **dadurch gekennzeichnet ist, dass** sie umfasst:
einen Prozessor (1520);
einen Speicher (1504) zum Speichern von prozessorausführbaren Anweisungen;
wobei der Prozessor dazu konfiguriert ist:
bei Erkennen einer lokalen Umschaltung des Fernsteuermodus eine Anforderung zum Aktualisieren des Verbindungsparameters an eine Bluetooth-gesteuerte Vorrichtung zu übertragen;
für jedes Verbindungsintervall nach der lokalen Umschaltung des Fernsteuermodus zu überwachen, ob eine von der Bluetooth-gesteuerten Vorrichtung übertragene Antwort zum Einwilligen in Aktualisierung des Verbindungsparameters lokal empfangen wird, wobei Reaktionszeit zum Aktualisieren des Verbindungsparameters in der Antwort übermittelt wird und früher ist als ursprünglich in der Bluetooth-Fernsteuervorrichtung mit geringer Leistung eingestellte Standard-Reaktionszeit; und
wenn die Antwort empfangen wird, den Verbindungsparameter zwischen der Bluetooth-Fernsteuervorrichtung mit geringer Leistung und der Bluetooth-gesteuerten Vorrichtung zu aktualisieren, wenn die Reaktionszeit zum Aktualisieren des Verbindungsparameters abläuft,
wobei das Verbindungsintervall zwischen der Bluetooth-Fernsteuervorrichtung mit geringer Leistung und der Bluetooth-gesteuerten Vorrichtung bei Erkennen einer lokalen Umschaltung auf einen Sprach-Fernsteuermodus verkürzt wird, und bei Erkennen einer lokalen Umschaltung auf einen Tasten-Fernsteuermodus verlängert wird.

10. Computerprogramm, das Anweisungen zum Ausführen der Schritte eines Verfahrens zum Überwachen von Traffic nach einem der Schritte 1 bis 4 einschließt, wenn das Programm von einem Computer ausgeführt wird.

11. Aufzeichnungsmedium, das von einem Computer lesbar ist und darauf ein Computerprogramm aufgezeichnet hat, welches Anweisungen zum Ausführen der Schritte eines Verfahrens zum Überwachen von Traffic nach einem der Ansprüche 1 bis 4 einschließt.

## Revendications

1. Procédé pour mettre à jour un paramètre de connexion entre un dispositif de commande à distance Bluetooth basse puissance et un dispositif commandé par Bluetooth qui est connecté en communication avec le dispositif de commande à distance Bluetooth basse puissance, le procédé est effectué dans le dispositif de commande à distance Bluetooth basse puissance et **caractérisé en ce qu'**il comprend les étapes consistant à :
transmettre (201), au dispositif commandé par Bluetooth, un message d'invitation indiquant une commutation de mode de commande à distance dans le dispositif de commande à distance Bluetooth basse puissance, lors de la détection d'une commutation locale de mode de commande à distance, de sorte qu'une demande de mise à jour d'un paramètre de connexion est générée par le dispositif commandé par Bluetooth sur la base du message d'invitation et transmise au dispositif de commande à distance Bluetooth basse puissance, le temps de réaction pour la mise à jour du paramètre de connexion étant porté dans la demande de mise à jour du paramètre de connexion, et étant antérieur à un temps de réaction par défaut initialement établi dans le dispositif de commande à distance Bluetooth basse puissance ;
surveiller (202), pour chaque Intervalle de Connexion après la commutation locale du mode de commande à distance, si la demande de mise à jour du paramètre de connexion transmise par le dispositif commandé par Bluetooth est reçue localement ;
transmettre (203), au dispositif commandé par Bluetooth, une réponse pour accepter de mettre à jour le paramètre de connexion, lors de la détection de la demande de mise à jour du paramètre de connexion ; et
mettre à jour (204) le paramètre de connexion entre le dispositif de commande à distance Bluetooth basse puissance et le dispositif commandé par Bluetooth, lorsque le temps de réaction de mise à jour du paramètre de connexion expire,
dans lequel l'Intervalle de Connexion entre le dispositif de commande à distance Bluetooth basse puissance et le dispositif commandé par Bluetooth est raccourci lors de la détection d'une commutation locale en un mode de commande à distance vocale, et est allongé lors de la détection d'une commutation locale en un mode de commande à distance par bouton.

2. Procédé selon la revendication 1, dans lequel la commutation en mode de commande à distance vocale est réalisée en appuyant sur un bouton de commande vocale, le procédé comprend en outre les étapes consistant à :
transmettre (301), au dispositif commandé par Bluetooth, un message d'invitation indiquant que le bouton de commande vocale a été relâché, lors de la détection d'un relâchement du bouton de commande vocale, de sorte qu'une première demande de mise à jour du paramètre de connexion à une valeur précédente est générée par le dispositif commandé par Bluetooth sur la base du message d'invitation et transmise au dispositif de commande à distance Bluetooth basse puissance, le temps de réaction de mise à jour du paramètre de connexion étant porté dans la première demande de mise à jour du paramètre de connexion, et étant antérieur au temps de réaction par défaut ;
surveiller (302), pour chaque Intervalle de Connexion dans une seconde durée prédéterminée après le relâchement du bouton de commande vocale, si la première demande transmise par le dispositif commandé par Bluetooth est reçue localement ;
transmettre (303), au dispositif commandé par Bluetooth, une réponse pour accepter une mise à jour du paramètre de connexion, lors de la détection de la première demande ; et
mettre à jour (304) le paramètre de connexion entre le dispositif de commande à distance Bluetooth basse puissance et le dispositif commandé par Bluetooth à la valeur précédente, lorsque le temps de réaction de mise à jour du paramètre de connexion porté dans la première demande expire.

3. Procédé selon la revendication 1, dans lequel la commutation en mode de commande à distance vocale est réalisée en appuyant sur un bouton de commande vocale, le procédé comprend en outre les étapes consistant à :
transmettre, au dispositif commandé par Bluetooth, une seconde demande de mise à jour du paramètre de connexion à une valeur préétablie, lors de la détection d'un relâchement du bouton de commande vocale ;
surveiller, pour chaque Intervalle de Connexion dans une seconde durée prédéterminée après le relâchement du bouton de commande vocale, si une réponse pour accepter une mise à jour du paramètre de connexion à la valeur préétablie transmise par le dispositif commandé par Bluetooth est reçue localement, dans lequel le temps de réaction de mise à jour du paramètre de connexion est porté dans la réponse, et est antérieur à un temps de réaction par défaut ;
mettre à jour, si la réponse pour accepter une mise à jour du paramètre de connexion à la valeur préétablie transmise par le dispositif commandé par Bluetooth est reçue, le paramètre de connexion entre le dispositif de commande à distance Bluetooth basse puissance et le dispositif commandé par Bluetooth à la valeur préétablie, lorsque le temps de réaction porté dans la réponse expire.

4. Procédé pour mettre à jour un paramètre de connexion entre un dispositif de commande à distance Bluetooth basse puissance et un dispositif commandé par Bluetooth qui est connecté en communication avec le dispositif de commande à distance Bluetooth Bluetooth, le procédé est effectué dans le dispositif de commande à distance Bluetooth basse puissance et est **caractérisé en ce qu'**il comprend les étapes consistant à :
transmettre (501), au dispositif commandé par Bluetooth, une demande de mise à jour d'un paramètre de connexion, lors de la détection d'une commutation locale du mode de commande à distance ;
surveiller (502), pour chaque Intervalle de Connexion après la commutation locale du mode de commande à distance, si une réponse pour accepter une mise à jour du paramètre de connexion transmise par le dispositif commandé par Bluetooth est reçue localement, dans lequel le temps de réaction de mise à jour du paramètre de connexion est porté dans la réponse, et est antérieur au temps de réaction par défaut initialement établi dans le dispositif de commande à distance Bluetooth basse puissance ; et
mettre à jour (503), si la réponse est reçue, le paramètre de connexion entre le dispositif de commande à distance Bluetooth basse puissance et le dispositif commandé par Bluetooth, lorsque le temps de réaction de mise à jour du paramètre de connexion expire,
dans lequel l'Intervalle de Connexion entre le dispositif de commande à distance Bluetooth basse puissance et le dispositif commandé par Bluetooth est raccourci lors de la détection d'une commutation locale en un mode de commande à distance vocale, et est allongé lors de la détection d'une commutation locale en un mode de commande à distance par bouton.

5. Appareil pour mettre à jour un paramètre de connexion entre un dispositif de commande à distance Bluetooth basse puissance et un dispositif commandé par Bluetooth qui est connecté en communication avec le dispositif de commande à distance Bluetooth basse puissance, l'appareil se trouvant dans le dispositif de commande à distance Bluetooth basse puissance et **caractérisé en ce qu'**il comprend :
un premier module de transmission (710) configuré pour transmettre, au dispositif commandé par Bluetooth, un message d'invitation indiquant une commutation de mode de commande à distance dans le dispositif de commande à distance Bluetooth basse puissance, lors de la détection d'une commutation locale de mode de commande à distance, de sorte qu'une demande de mise à jour d'un paramètre de connexion est générée par le dispositif commandé par Bluetooth sur la base du message d'invitation et transmise au dispositif de commande à distance Bluetooth basse puissance, dans lequel le temps de réaction de mise à jour du paramètre de connexion est porté dans la demande de mise à jour du paramètre de connexion, et est antérieur à un temps de réaction par défaut établi initialement dans le dispositif de commande à distance Bluetooth basse puissance ;
un premier module de surveillance (720) configuré pour surveiller, pour chaque Intervalle de Connexion après la commutation locale de mode de commande à distance, si la demande de mise à jour du paramètre de connexion transmise par le dispositif commandé par Bluetooth est reçue localement ;
un premier module de réponse (730) configuré pour transmettre, au dispositif commandé par Bluetooth, une réponse pour accepter une mise à jour du paramètre de connexion, lors de la détection de la demande de mise à jour du paramètre de connexion ; et
un premier module de mise à jour (740) configuré pour mettre à jour le paramètre de connexion entre le dispositif de commande à distance Bluetooth basse puissance et le dispositif commandé par Bluetooth, lorsque le temps de réaction de mise à jour du paramètre de connexion expire,
dans lequel le premier module de mise à jour (740) comprend : un premier sous-module de mise à jour (741) configuré pour raccourcir l'Intervalle de Connexion entre le dispositif de commande à distance Bluetooth basse puissance et le dispositif commandé par Bluetooth à une première durée prédéterminée, lors de la détection d'une commutation locale en un mode de commande à distance vocale ; et
dans lequel le premier module de mise à jour (740) comprend : un troisième sous-module de mise à jour (743) configuré pour allonger l'Intervalle de Connexion entre le dispositif de commande à distance Bluetooth basse puissance et le dispositif commandé par Bluetooth à une seconde durée prédéterminée, lors de la détection d'une commutation locale en un mode de commande à distance par bouton.

6. Appareil selon la revendication 5, dans lequel la commutation en mode de commande à distance vocale est réalisée en appuyant sur un bouton de commande vocale, l'appareil comprend en outre :
un second module de transmission (810) configuré pour transmettre, au dispositif commandé par Bluetooth, un message d'invitation indiquant que le bouton de commande vocale a été relâché, lors de la détection d'un relâchement du bouton de commande vocale, de sorte qu'une première demande de mise à jour du paramètre de connexion à une valeur précédente est générée par le dispositif commandé par Bluetooth sur la base du message d'invitation et transmise au dispositif de commande à distance Bluetooth basse puissance, dans lequel le temps de réaction pour le paramètre de connexion est porté dans la première demande de mise à jour du paramètre de connexion, et est antérieur à un temps de réaction par défaut ;
un second module de surveillance (820) configuré pour surveiller, pour chaque Intervalle de Connexion dans une seconde durée prédéterminée après le relâchement du bouton de commande vocale, si la première demande transmise par le dispositif commandé par Bluetooth est reçue localement ;
un second module de réponse (830) configuré pour transmettre, au dispositif commandé par Bluetooth, une réponse pour accepter une mise à jour du paramètre de connexion lors de la détection de la première demande ; et
un second module de mise à jour (840) configuré pour mettre à jour le paramètre de connexion entre le dispositif de commande à distance Bluetooth basse puissance et le dispositif commandé par Bluetooth à la valeur précédente, lorsque le temps de réaction de mise à jour du paramètre de connexion porté dans la première demande expire.

7. Appareil pour mettre à jour un paramètre de connexion entre un dispositif de commande à distance Bluetooth basse puissance et un dispositif commandé par Bluetooth qui est connecté en communication avec le dispositif de commande à distance Bluetooth basse puissance, l'appareil se trouvant dans le dispositif de commande à distance Bluetooth basse puissance et **caractérisé en ce qu'**il comprend :
un module de transmission (1110) configuré pour transmettre, au dispositif commandé par Bluetooth, une demande de mise à jour d'un paramètre de connexion lors de la détection d'une commutation locale de mode de commande à distance ;
un module de surveillance (1120) configuré pour surveiller, pour chaque Intervalle de Connexion après la commutation locale du mode de commande à distance, si une réponse pour accepter une mise à jour du paramètre de connexion transmise par le dispositif commandé par Bluetooth est reçue localement, le temps de réaction de mise à jour du paramètre de connexion étant porté dans la réponse, et étant antérieur au temps de réaction par défaut établi initialement dans le dispositif de commande à distance Bluetooth basse puissance ; et
un module de mise à jour (1130) configuré pour mettre à jour, si la réponse est reçue, le paramètre de connexion entre le dispositif de commande à distance Bluetooth basse puissance et le dispositif commandé par Bluetooth, lorsque le temps de réaction de mise à jour du paramètre de connexion expire,
dans lequel le premier module de mise à jour (740) comprend : un premier sous-module de mise à jour (741) configuré pour raccourcir l'Intervalle de Connexion entre le dispositif de commande à distance Bluetooth basse puissance et le dispositif commandé par Bluetooth à une première durée prédéterminée, lors de la détection d'une commutation locale en un mode de commande à distance vocale ; et
dans lequel le premier module de mise à jour (740) comprend : un troisième sous-module de mise à jour (743) configuré pour allonger l'Intervalle de Connexion entre le dispositif de commande à distance Bluetooth basse puissance et le dispositif commandé par Bluetooth à une seconde durée prédéterminée, lors de la détection d'une commutation locale en un mode de commande à distance par bouton.

8. Appareil pour mettre à jour un paramètre de connexion entre un dispositif de commande à distance Bluetooth basse puissance et un dispositif commandé par Bluetooth qui est connecté en communication avec le dispositif de commande à distance Bluetooth basse puissance, l'appareil se trouvant dans le dispositif de commande à distance Bluetooth basse puissance et **caractérisé en ce qu'**il comprend :
un processeur (1520) ;
une mémoire (1504) pour stocker des instructions exécutables par processeur ;
dans lequel le processeur est configuré pour :
transmettre, à un dispositif commandé par Bluetooth, un message d'invitation indiquant une commutation de mode de commande à distance dans le dispositif de commande à distance Bluetooth basse puissance, lors de la détection d'une commutation locale de mode de commande à distance, de sorte qu'une demande de mise à jour d'un paramètre de connexion est générée par le dispositif commandé par Bluetooth sur la base du message d'invitation et transmise au dispositif de commande à distance Bluetooth basse puissance, le temps de réaction pour la mise à jour du paramètre de connexion étant porté dans la demande de mise à jour du paramètre de connexion, et étant antérieur à un temps de réaction par défaut initialement établi dans le dispositif de commande à distance Bluetooth basse puissance ;
surveiller, pour chaque Intervalle de Connexion après la commutation locale du mode de commande à distance, si la demande de mise à jour du paramètre de connexion transmise par le dispositif commandé par Bluetooth est reçue localement ;
transmettre, au dispositif commandé par Bluetooth, une réponse pour accepter de mettre à jour le paramètre de connexion, lors de la détection de la demande de mise à jour du paramètre de connexion ; et
mettre à jour le paramètre de connexion entre le dispositif de commande à distance Bluetooth basse puissance et le dispositif commandé par Bluetooth, lorsque le temps de réaction de mise à jour du paramètre de connexion expire,
dans lequel l'Intervalle de Connexion entre le dispositif de commande à distance Bluetooth basse puissance et le dispositif commandé par Bluetooth est raccourci lors de la détection d'une commutation locale en un mode de commande à distance vocale, et est allongé lors de la détection d'une commutation locale en un mode de commande à distance par bouton.

9. Appareil pour mettre à jour un paramètre de connexion entre un dispositif de commande à distance Bluetooth basse puissance et un dispositif commandé par Bluetooth qui est connecté en communication avec le dispositif de commande à distance Bluetooth basse puissance, l'appareil se trouvant dans le dispositif de commande à distance Bluetooth basse puissance et **caractérisé en ce qu'**il comprend :
un processeur (1520) ;
une mémoire (1504) pour stocker des instructions exécutables par processeur ;
dans lequel le processeur est configuré pour :
transmettre, à un dispositif commandé par Bluetooth, une demande de mise à jour du paramètre de connexion, lors de la détection d'une commutation locale du mode de commande à distance ;
surveiller, pour chaque Intervalle de Connexion après la commutation locale du mode de commande à distance, si une réponse pour accepter une mise à jour du paramètre de connexion transmise par le dispositif commandé par Bluetooth est reçue localement, dans lequel le temps de réaction de mise à jour du paramètre de connexion est porté dans la réponse, et est antérieur au temps de réaction par défaut initialement établi dans le dispositif de commande à distance Bluetooth basse puissance ; et
mettre à jour, si la réponse est reçue, le paramètre de connexion entre le dispositif de commande à distance Bluetooth basse puissance et le dispositif commandé par Bluetooth, lorsque le temps de réaction de mise à jour du paramètre de connexion expire,
dans lequel l'Intervalle de Connexion entre le dispositif de commande à distance Bluetooth basse puissance et le dispositif commandé par Bluetooth est raccourci lors de la détection d'une commutation locale en un mode de commande à distance vocale, et est allongé lors de la détection d'une commutation locale en un mode de commande à distance par bouton.

10. Programme d'ordinateur incluant des instructions pour exécuter les étapes d'un procédé de surveillance de trafic selon l'une quelconque des revendications 1 à 4, lorsque ledit programme est exécuté par un ordinateur.

11. Support d'enregistrement lisible par un ordinateur et sur lequel est enregistré un programme d'ordinateur incluant des instructions pour exécuter les étapes d'un procédé de surveillance de trafic selon l'une quelconque des revendications 1 à 4.
